# EUROPÄISCHE PATENTSCHRIFT

(11) **EP 2 514 002 B1**
(45) Veröffentlichungstag und Bekanntmachung des Hinweises auf die Patenterteilung: **30.03.2016**
(21) Anmeldenummer: 10794998.4
(22) Anmeldetag: 17.12.2010
(51) Int. Cl.: H01M 2/12, H01M 10/615, H01M 10/625, H01M 10/647, H01M 10/6556, H01M 10/6557, H01M 10/6555, H01M 10/6554, H01M 10/613, B60L 1/02, B60L 11/18

(54) **KÜHL-/HEIZELEMENT FÜR EINEN AKKUMULATOR**
COOLING OR HEATING ELEMENT FOR AN ACCUMULATOR
ÉLÉMENT DE REFROIDISSEMENT OU CHAUFFAGE POUR UN ACCUMULATEUR

(30) Priorität: 18.12.2009 DE 102009058860
(43) Veröffentlichungstag der Anmeldung: 24.10.2012
(73) Patentinhaber: Samsung SDI Co., Ltd., Yongin-si, Gyeonggi-do (KR)
(72) Erfinder: KRAMMER, Gert, A-8042 Graz (AT)
(74) Vertreter: Gulde & Partner
(86) Internationale Anmeldenummer: PCT/EP2010/070151
(87) Internationale Veröffentlichungsnummer: WO 2011/073424

(56) Entgegenhaltungen:
- EP-A2- 1 271 085
- EP-A2- 1 577 966
- JP-A- 2009 009 889

## Beschreibung

### TECHNISCHES GEBIET

Die Erfindung betrifft ein Kühl-/Heizelement für einen Akkumulator.

### STAND DER TECHNIK

In der heutigen Zeit werden vermehrt elektrische und elektronische Geräte verwendet, die unabhängig von einem Stromnetz betrieben werden können. Dabei bedingen immer leistungsstärkere Geräte sowie der Wunsch nach möglichst langer Betriebszeit immer leistungsfähigere Akkumulatoren. In aller Regel sollen diese möglichst klein und leicht sein aber dennoch hohen Energieinhalt aufweisen. Um diese sich widersprechenden Forderungen, die insbesondere beim Bau von Elektrokraftfahrzeugen zum Tragen kommen, zu erfüllen, wurden in letzter Zeit große Anstrengungen unternommen. Nichts desto trotz existiert auf dem Gebiet der Akkumulatortechnik noch Verbesserungspotential.

Aus der EP 1 271 085 A2 ist eine Vorrichtung zum Kühlen einer Fahrzeugeinrichtung, insbesondere Batterie oder Brennstoffzelle, mittels eines Kühlmittels mit einer Mehrzahl an gleichartig ausgebildeten, mit Kühlmittel durchströmbaren und mit mindestens einem zu kühlenden Element der Fahrzeugeinrichtung in Anlagekontakt bringbaren Kühlelementen bekannt.

EP 1 577 966 A2 offenbart eine Akkumulatorvorrichtung mit einer Vielzahl von identischen, flachen Rahmen, wobei jeder Rahmen einen Aufnahmebereich zur Aufnahme eines Akkumulators umfasst, und jeder Rahmen eine Kühldurchflussstruktur umfassen kann, so dass die Kühldurchflussstrukturen der Vielzahl an Rahmen verbunden sind, wenn die Vielzahl an Rahmen gestapelt ist.

### OFFENBARUNG DER ERFINDUNG

Die Aufgabe der vorliegenden Erfindung ist es daher, einen verbesserten Akkumulator beziehungsweise ein Kühl-/Heizelement für einen Akkumulator anzugeben, insbesondere einen Akkumulator für ein Elektrokraftfahrzeug.

Die Erfindung wird durch ein Kühl-/Heizelement nach dem Patentanspruch 1 gelöst, nämlich durch ein Kühl-/Heizelement für einen Akkumulator, umfassend eine Kühlfläche mit einer ersten Begrenzung, welche zum Körperkontakt zu einer ersten Zelle des Akkumulators vorgesehen ist, und einer zweiten Begrenzung, welche zum Körperkontakt zu einer zweiten Zelle des Akkumulators vorgesehen ist, wobei das Kühl-/Heizelement stapelbar ist und einen Zulauf und/oder Ablauf umfasst, welcher in einem Stapel mit einem Zulauf und/oder Ablauf eines benachbarten Kühl-/Heizelements zusammenwirkt, umfassend eine Strömungsblende (74) am Rand der Kühlfläche (32, 58, 62, 72, 83), welche einen Zulauf eines Kühl-/Heizmediums bei steigendem Abstand zwischen erster und zweiter Begrenzung (13) drosselt und/oder eine Strömungsblende (75) am Rand der Kühlfläche (32, 58, 62, 72, 83), welche einen Ablauf eines Kühl-/Heizmediums bei sinkendem Abstand zwischen erster und zweiter Begrenzung (13) drosselt.

Die Zellen eines Akkumulators erzeugen beim Betrieb Verlüstwärme, die im Regelfall über die große thermische Masse der Zellen selbst aufgefangen-wird. Eine aktive Kühlung ist daher meist nur bei sehr hohen Außentemperaturen erforderlich oder bei einer sehr langen Betriebszeit eines Akkumulators beziehungsweise wenn "Leistungszellen" wie z.B. in einem Hybridfahrzeug verwendet werden, die mehrfach innerhalb einiger Minuten aufgeladen bzw. entladen werden (die thermische Masse reicht dann sehr schnell nicht mehr aus). Hingegen ist eine Heizung schon bei mäßig tiefen Temperaturen vorteilhaft, da die chemische Reaktionsfreude der meisten Zelltypen zum Erliegen kommt.

Darüber hinaus können die Kühl-/Heizelemente neben der Verwendung für die Zellen natürlich auch für die Temperierung anderer Komponenten-im Akkumulator verwendet werden, beispielsweise für die Heizung/Kühlung von elektronischen Baugruppen.

Erfindungsgemäß bilden die Zu- und Abläufe der einzelnen Elemente einen Zu- und Ablauf, welcher über den gesamten Stapel reichen kann, ohne dass dazu eine gesonderte Verrohrung nötig wäre. Der Zusammenbau des Akkumulators gestaltet sich somit besonders einfach, insbesondere wenn eine Dichtung direkt am Kühl-/Heizelement angespritzt ist. Die Dichtung kann aber auch als gesondertes Teil ausgeführt sein. In beiden Fällen sind sowohl Dichtungen aus demselben Material möglich, aus dem auch das Kühl-/Heizelement besteht, als auch Dichtungen aus einem anderen Material.

Schließlich bilden die Kühl-/Heizelemente gleichsam "Feuerwände" zwischen den einzelnen Zellen. Bei Überhitzung, Überladung oder sonstigem unsachgemäßem Gebrauch kann es zu einem sogenannten "Thermal Runaway" kommen. Dabei wird die gesamte in einer Zelle gespeicherte chemische und elektrische Energie innerhalb von 5 bis 25 Sekunden umgesetzt. Dadurch entstehen lokal sehr hohe Temperaturen von über 700°C, die wegen der hohen Packungsdichte der Zellen die benachbarten Zellen entzünden können. Die Kühl-/Heizelemente verhindern dabei ein Übergreifen von Hitze und Feuer auf benachbarte, noch nicht vom Thermal Runaway betroffene Zellen.

Bei einem erfindungsgemäßen Kühl-/Heizelement ist eine Strömungsblende am Rand der Kühlfläche vorgesehen, welche einen Zulauf eines Kühl-/Heizmediums bei steigendem Abstand zwischen erster und zweiter Begrenzung drosselt. Bei dieser Variante wird der Zulauf bei steigendem Abstand zwischen erster und zweiter Begrenzung gedrosselt und bei sinkendem Abstand erhöht. Auf diese Weise wird der Druck in der Kühlfläche dahingehend geregelt, dass sinkender Druck einer weiteren Vergrößerung des Abstands zwischen den Begrenzungen entgegenwirkt und umgekehrt.

Alternativ oder zusätzlich ist bei einem erfindungsgemäßen Kühl-/Heizelement eine Strömungsblende am Rand der Kühlfläche vorgesehen, welche einen Ablauf eines Kühl-/Heizmediums bei sinkendem Abstand zwischen erster und zweiter Begrenzung drosselt. Bei dieser Variante wird der Ablauf bei steigendem Abstand zwischen erster und zweiter Begrenzung erhöht und bei sinkendem Abstand gedrosselt. Auf diese Weise wird der Druck in der Kühlfläche dahingehend geregelt, dass sinkender Druck einer weiteren Vergrößerung des Abstands zwischen den Begrenzungen entgegenwirkt und umgekehrt. Selbstverständlich ist diese Variante auch mit der oben genannten Variante eines geregelten Zulaufs kombinierbar.

Vorteilhafte Ausgestaltungen und Weiterbildungen der Erfindung ergeben sich aus den Unteransprüchen sowie aus der Beschreibung in Zusammenschau mit den Figuren der Zeichnung.

Vorteilhaft ist es wenn der Zulauf und/oder Ablauf des Kühl-/Heizelements unmittelbar mit dem Zulauf und/oder Ablauf eines benachbarten Kühl-/Heizelements zusammenwirkt. Dadurch bilden bei Stapelung mehrerer erfindungsgemäßer Kühl-/Heizelemente die Zuläufe und/oder Abläufe der einzelnen Kühl-/Heizelemente einen gemeinsamen Zulauf und/oder Ablauf, der sich über den Stapel der Kühl-/Heizelemente erstreckt. Weitere Verbindungselemente zwischen den einzelnen Zuläufen und/oder Abläufen, wie zum Beispiel Verrohrungen, sind dadurch nicht notwendig.

Vorteilhaft ist es, wenn die beiden Begrenzungen des Kühl-/Heizelements elastisch miteinander verbunden sind. Das Volumen einer Zelle variiert je nach Ladezustand. Erfindungsgemäß kann das Kühl-/Heizelement die Zellen je nach Bedarf heizen oder kühlen sowie Volumsschwankungen der Zellen ausgleichen und Druckkräfte auf die Zellen ausüben. Diese Druckkräfte dienen unter anderem zur Fixierung der Zellen, welche sich in aller Regel in einem Kunststoffsack befinden. Insgesamt bilden die einzelnen Kühl-/Heizelemente im Stapel ein sehr stabiles Akkumulatorgehäuse.

Vorteilhaft ist es bei einem erfindungsgemäßen Kühl-/Heizelement, wenn im Inneren des Kühl-/Heizelements im Bereich der Kühlfläche elastische Stege zur Verbindung der ersten und zweiten Begrenzung vorgesehen sind. Auf diese Weise kann sowohl ein guter Zusammenhalt des Kühl-/Heizelements als auch eine Möglichkeit zur Volumsänderung des Kühl-/Heizelements erreicht werden.

Vorteilhaft ist es bei einem erfindungsgemäßen Kühl-/Heizelement, wenn die Stege geradlinig von der ersten zur zweiten Begrenzung verlaufen, insbesondere wenn sie im Wesentlichen normal auf die Begrenzungsflächen stehen. Dadurch ist eine besonders einfache und kostengünstige Ausbildung der Stege gegeben.

Vorteilhaft ist es bei einem erfindungsgemäßen Kühl-/Heizelement, wenn die Stege Krümmungsbereiche aufweisen, also beispielsweise eine oder mehrere Biegungen oder Schleifen pro Steg. Durch diese Krümmungsbereiche können die Stege leicht verformt werden, sodass der Widerstand gegen eine Volumsänderung nur gering ist.

Besonders vorteilhaft ist es bei einem erfindungsgemäßen Kühl-/Heizelement, wenn die Stege mäanderförmig ausgestaltet sind. Durch die Mäanderform können die Stege leicht verformt werden, sodass der Widerstand gegen eine Volumsänderung nur gering ist. Darüber hinaus bewirkt die Mäanderform, dass bei Kompression des Kühl-/Heizelements ein bestimmter Mindestabstand zwischen den Begrenzungen eingehalten wird, da bei übermäßiger Kompression die Schenkel eines Mäanderbogens aufeinander zu liegen kommen und nicht oder nur unter erheblichem Kraftaufwand weiter zusammen gepresst werden können.

Vorteilhaft ist es bei einem erfindungsgemäßen Kühl-/Heizelement, wenn die Stege schräg von der ersten Begrenzung zur zweiten Begrenzung verlaufen. Auch hier ist der Widerstand gegen eine Volumsänderung nur gering. Desgleichen wird bei übermäßiger Kompression des Kühl-/Heizelements ebenfalls ein Mindestabstand zwischen dessen Begrenzungen eingehalten, der in diesem Fall in etwa der Dicke des Stegs entspricht.

Vorteilhaft ist es bei einem erfindungsgemäßen Kühl-/Heizelement, wenn Abstandsnoppen im Bereich der Kühlfläche vorgesehen sind, insbesondere ohne die erste Begrenzungsfläche mit der zweiten zu verbinden. Auf diese Weise kann ebenfalls ein Mindestabstand zwischen den Begrenzungen des Kühl-/Heizelements eingehalten werden, insbesondere wenn auf elastische Stege der einfacheren Herstellbarkeit halber verzichtet wird. Die Noppen können dabei einseitig oder zweiseitig angeordnet werden.

Vorteilhaft ist es bei einem erfindungsgemäßen Kühl-/Heizelement, wenn ein starrer Rand vorgesehen ist, welcher elastisch mit den Begrenzungen des Kühl-/Heizelements verbunden ist. Der starre Rand ermöglicht eine gute Stapelbarkeit der Kühl-/Heizelemente. Weiterhin kann er Zulauf- und Ablaufkanäle für das Kühlmedium aufnehmen. Schließlich gewährleistet der starre Rand während der Montage des Akkumulators die sichere Positionierung der Zellen. Ist der Akkumulator fertiggestellt, so bilden die Kühl-/Heizelemente im Verbund ein Gehäuse für alle Zellen und fixieren jede Zelle für sich.

Vorteilhaft ist es bei einem erfindungsgemäßen Kühl-/Heizelement, wenn der starre Rand mindestens so hoch ist wie eine Zelle, die Dicke der Begrenzungen und ein Mindestabstand zwischen den Begrenzungen. In diesem Fall gewährleistet der starre Rand auch, dass ein gewisser Mindestabstand zwischen den einzelnen Kühl-/Heizelementen eingehalten wird. Auf diese Weise kann gesichert werden, dass die einzelnen Kühl-/Heizelemente eines Stapels mehr oder minder gleich zusammengedrückt oder aufgeweitet werden. Starke lokale Unterschiede in der Kühl-/Heizleistung können somit vermieden werden.

Vorteilhaft ist es bei einem erfindungsgemäßen Kühl-/Heizelement, wenn es eine Verzahnung an dessen zum Stapeln vorgesehenen Grenzflächen aufweist. Die Verzahnung hilft, Schubkräfte innerhalb des Stapels, d.h. quer zum Stapel beziehungsweise zu dessen Rand, zu übertragen und diesen somit zu stabilisieren. Wenn die Verzahnung unsymmetrisch aufgebaut ist, kann diese überdies verhindern, dass die Kühl-/Heizelemente verkehrt oder verdreht gestapelt werden.

Vorteilhaft ist es bei einem erfindungsgemäßen Kühl-/Heizelement überdies, wenn dieses zumindest einen mit einem Kühlmedium gekühlten Kanal zur Abfuhr heißer Brenngase aus einer Zelle umfasst. Bei Überhitzung, Überladung oder sonstigem unsachgemäßem Gebrauch kann es wie bereits erwähnt zu einem "Thermal Runaway" kommen. Um ein Übergreifen auf andere Zellen zu verhindern, wird vorteilhaft der mit einem Kühlmedium gekühlte Kanal zur Abfuhr heißer Brenngase vorgesehen. Um die Wärmeabfuhr zu verbessern, können auch mehrere Kanäle vorgesehen werden.

Die Aufgabe der Erfindung wird weiterhin mit einer Volumenausgleichsanordnung gelöst, nämlich durch eine Volumenausgleichsanordnung für ein Kühl-/Heizmedium (beziehungsweise für den Verbund an Kühl-/Heizelementen) eines Akkumulators, umfassend ein flexibles Gehäuse, auf welches vorgespannte Tellerfedern wirken oder durch eine Volumenausgleichsanordnung für ein Kühl-/Heizmedium eines Akkumulators, umfassend ein starres Gehäuse, in dem ein flexibles Gehäuse angeordnet ist, auf welches vorgespannte elastische Elemente, insbesondere Tellerfedern, wirken.

Wie schon erwähnt, variiert das Volumen der Zellen von Akkumulatoren je nach Ladezustand und Temperatur. Damit geht in der Regel auch eine Volumsänderung der an die Zellen angrenzenden Kühl-/Heizelemente einher. Eine erfindungsgemäße Volumenausgleichsanordnung ermöglicht nun die genannten Volumsänderungen, da als Kühlmedium üblicherweise eine Flüssigkeit dient, welche ja nicht wie beispielsweise Gase komprimierbar ist. Als elastische Elemente kommen natürlich alle Arten von Federn, insbesondere auch Spiralfedern, sowie beispielsweise auch elastische Kunststoffschäume in Betracht.

Vorteilhaft ist es bei einer Volumenausgleichsanordnung, wenn die elastischen Elemente, insbesondere Tellerfedern, in einem Bereich betrieben werden, in dem die Kraft im Wesentlichen unabhängig vom Federweg ist. Auf diese Weise kann ein im Wesentlichen konstanter Druck im Akkumulator unabhängig von der Ausdehnung der Zellen erreicht werden.

Weiterhin wird die Erfindung durch ein Kühlmedium gelöst, nämlich einem Kühlmedium für ein erfindungsgemäßes Kühl-/Heizelement, der ein Frostschutzmittel und/oder ein Tensid und/oder ein Korrosionsschutzmittel zugesetzt ist.

Insbesondere durch Zusatz von Tensiden bekommt das Kühlmedium eine Schmutz und Luftblasen lösende Wirkung. Dadurch werden Schmutz und Luftblasen in dem Kühlmedium gelöst und aus den Kapillaren der Kühl-/Heizelemente entfernt. Diese Luftblasen und Schmutz lösende Wirkung ermöglicht weiterhin, dass der Zu- und Abfluss bei einem liegend eingebauten Akkumulator auch auf der Unterseite angeordnet werden kann. Die Luftblasen können sich dann nicht in den höher liegenden Bereichen der Kühlelemente sammeln bzw. festsetzen - diese werden bei ausreichender Strömungsgeschwindigkeit ausgewaschen. Die Kühlwirkung bleibt damit über die gesamte Kühlfläche gleichmäßig erhalten.

Darüber hinaus wird die Erfindung durch eine Zelle für einen Akkumulator gelöst, nämlich einer Zelle für einen Akkumulator, deren Anschlussfahne derart gekröpft ist, dass sie bei Stapeln mit einer anderen Zelle auf deren Anschlussfahne zu liegen kommt.

Erfindungsgemäß werden jeweils "linke" und "rechte" Zellen übereinandergestapelt, um eine gewünschte Gesamtkapazität beziehungsweise Spannung zu erhalten. Dabei kommen die Anschlussfahnen übereinander zu liegen, so dass die Verbindung der Zellen ohne weitere Verbindungsdrähte oder Verbindungsstege erfolgen kann. Die Anschlussfahnen können also direkt miteinander verlötet, verschweißt (z.B. durch Ultraschallschweißen beziehungsweise Ultraschallkompaktieren) oder chemisch reaktiv verbunden werden. Die Aneinanderreihung von Zellen, insbesondere bei Serienschaltung, ist somit besonders einfach. Bei Parallelschaltung der Zellen sind gegebenenfalls (in geringer Zahl) zusätzliche Verbindungsbügel vorzusehen. Eine aufwändige Ausführung in Bimetall kann dabei üblicherweise entfallen.

Vorteilhaft ist es bei einer Zelle, wenn diese zusätzlich eine Anschlussfahne zum Anschluss eines Temperatur- und/oder Spannungssensors umfasst. Auf diese Weise kann ein Temperatur- und/oder Spannungssensor besonders einfach angeschlossen werden.

Schließlich wird die Aufgabe der Erfindung durch einen Akkumulator gelöst, nämlich durch einen Akkumulator, umfassend ein in einem Stapel angeordnetes Grundelement, ein Deckelelement und zumindest ein erfindungsgemäßes Kühl-/Heizelement zwischen dem Grundelement und dem Deckelelement sowie zumindest eine erste und eine zweite Zelle, welche an das Kühl/-Heizelement angrenzen im Inneren des Stapels.

Ein typischer Batterieaufbau benötigt zumeist mehrere in Serie geschaltete Zellen, um eine gewünschte Ausgangsspannung zu erhalten. Häufig werden 100 und mehr Zellen benötigt. Nach dem Stand der Technik können beispielsweise 12 Zellen zu einem Modul zusammengebaut werden und anschließend 8 Module aneinandergereiht werden, um eine gewünschte Spannung zu erhalten. Für die Realisierung verschiedener Kapazitäten und/oder Spannungen eines Akkumulators wird erfindungsgemäß nun vorgeschlagen, einen Stapel von Zellen (z.B. 50 bis 70 Zellen) mit dazwischen liegenden Kühl-/Heizelementen vorzusehen. Die Herstellung eines Akkumulators wird somit besonders flexibel, da man nicht auf Module mit 12 Zellen und deren Vielfache angewiesen ist, sondern auch einzelne Zellen hinzufügen oder weglassen kann. Eine zur Überwachung der Zellen vorgesehene elektronische Schaltung kann natürlich auch kleinere Gruppen aus den 50 bis 70 Zellen überwachen, diese Schaltungen sind aber vorzugsweise in einer elektronischen Baugruppe zusammengefasst.

Vorteilhaft ist es bei einem erfindungsgemäßen Akkumulator, wenn das Medium im Kühl-/Heizelement unter Druck steht. Die Zellen des Akkumulators weisen nicht notwendigerweise ein starres Außengehäuse auf sondern sind teilweise nur in relativ weichen Kunststoffhüllen eingebettet. Aus diesem Grund benötigen die Zellen für eine korrekte Funktion in der Regel einen äußeren Druck, typischerweise bis zu 2 bar.

Vorteilhaft ist es bei einem erfindungsgemäßen Akkumulator, wenn zwischen einer Begrenzung eines Kühl-/Heizelements und einer Zelle ein brandhemmendes Material angeordnet ist, insbesondere ein feuerfestes Flies, ein feuerfestes Gewebe oder feuerfestes Papier. Bei einem Defekt oder einer missbräuchlichen Verwendung des Akkumulators kann es zu einem "Abbrennen" einzelner Zellen kommen, welche durch die große Hitzeentwicklung auch die Nachbarzellen entzünden und so eine Zerstörung des gesamten Akkumulators verursachen können. Um dieser Kettenreaktion entgegenzuwirken, wird vorteilhaft eine brandhemmende Schicht zwischen einer Zelle und einem Kühl-/Heizelement derart angeordnet, dass das brandhemmende Material einen großen Anteil des Temperaturgefälles bis zur Oberfläche des Kühlelements abbaut. Damit kann eine thermische Schädigung eines Kühl-/Heizelements, welches an eine vom Thermal Runaway betroffene Zelle angrenzt, verhindert werden.

Vorteilhaft ist es bei einem erfindungsgemäßen Akkumulator, wenn die Oberfläche des Grundelements und/oder Deckelelements nach außen gewölbt ist, insbesondere mit einer mittigen Einbuchtung. Auf diese Weise können Kräfte, die beispielsweise durch ein um den Akkumulator gewickeltes Spannband aufgebracht werden, besonders gut in den Akkumulator eingeleitet werden. Die Einbuchtung kann vorteilhaft dazu dienen, ein Spannschloss aufzunehmen.

Vorteilhaft ist es bei einem erfindungsgemäßen Akkumulator, wenn im Stapel ein Steuerelement mit einem elektronischen Steuermodul angeordnet ist, welches zur Steuerung von Schalt- und/oder Messvorgängen im Akkumulator vorgesehen ist. Moderne Akkumulatoren umfassen häufig elektronische Schaltungen, die der Überwachung und Steuerung desselben dienen. Erfindungsgemäß werden diese Steuermodule in einem oder mehreren Steuerelementen integriert, welche beispielsweise innerhalb eines Stapels von Kühl-/Heizelementen angeordnet werden können. Der Aufbau eines Akkumulators gestaltet sich somit besonders einfach.

Vorteilhaft ist es bei einem erfindungsgemäßen Akkumulator, wenn das Steuerelement an ein Kühl-/Heizelement angrenzt. Auf diese Weise kann das Steuerelement beziehungsweise das darin enthaltene Steuermodul gekühlt werden, was insbesondere dann von Vorteil ist, wenn das Steuermodul Elemente der Leistungselektronik beinhaltet, die mitunter sehr hohe Leistungen schalten. Dieses Steuermodul kann zum Beispiel ein Ladegerät für den Akkumulator umfassen.

Vorteilhaft ist es bei einem erfindungsgemäßen Akkumulator auch, wenn als Steuerelement eine Akkumulator-Trenn-Einheit beziehungsweise Battery Disconnect Unit und/oder eine Akkumulator-Verwaltungs-Einheit beziehungsweise Battery Management Unit vorgesehen ist. Auf diese Weise können die beiden bei einem Akkumulator häufig eingesetzten Einheiten leicht in den Akkumulator integriert beziehungsweise auch gekühlt werden.

Vorteilhaft ist es bei einem erfindungsgemäßen Akkumulator, wenn die elektrischen Anschlüsse der Einzelelemente des Akkumulators im Wesentlichen in einer Ebene liegen. Auf diese Weise ist die Verdrahtung des Akkumulators beziehungsweise die Überprüfung derselben - beispielsweise wenn der Akkumulator defekt ist - besonders einfach.

Vorteilhaft ist es bei einem erfindungsgemäßen Akkumulator, wenn alle Temperatur- und/oder Spannungssensoren zur Überwachung der Zellen und/oder Schaltungsteile für das Balancing der Zellen auf einer Platine angeordnet sind. Der Aufbau der Schaltung zur Überprüfung der Zellen des Akkumulators gestaltet sich somit besonders einfach.

Vorteilhaft ist es bei einem erfindungsgemäßen Akkumulator, wenn Temperatur- und/oder Spannungssensoren zur Überwachung der Zellen und/oder Schaltungsteile für das Balancing der Zellen auf verschiedenen Platinen angeordnet sind und zwischen den Platinen eine potentialfreie Kommunikationsverbindung vorgesehen ist. Hier werden einzelne Platinen für die Überwachung einer Zelle oder einer Gruppe von Zellen eingesetzt, was dem modularen Aufbau des Akkumulators entgegenkommt. Zwischen den Platinen besteht eine Spannungspotential-überbrückende Kommunikationsverbindung, sodass die mitunter hohen Potentialunterschiede innerhalb eines Zellenstapels nicht zur Beeinträchtigung oder gar Zerstörung der Bauteile auf den einzelnen Platinen führen kann. Die Kommunikation kann seriell von Platine zu Platine aber auch von jeder Platine zu jeder anderen beliebigen Platine erfolgen. Denkbar ist auch eine sternförmige Kommunikation zu einem zentralen Steuergerät. Selbstverständlich sind auch Mischformen denkbar.

Vorteilhaft ist es bei einem erfindungsgemäßen Akkumulator weiterhin, wenn als potentialfreie Kommunikationsverbindung eine optische Datenverbindung oder eine Funkverbindung vorgesehen ist. Auf diese Weise kann ein Spannungspotential zwischen den einzelnen Platinen besonders gut überbrückt werden. Diese Technik kann auch unabhängig von weiteren in der Anmeldung genannten Merkmalen, somit für jede Art von Akkumulator, genutzt werden.

Vorteilhaft ist es bei einem erfindungsgemäßen Akkumulator auch, wenn die elektrischen Anschlüsse der Einzelelemente des Akkumulators mit einer Zellüberwachungs-Einheit beziehungsweise einem Cell Supervisory Cuircuit verbunden sind. Auf diese Weise kann diese bei einem Akkumulator häufig eingesetzte Einheit leicht in den Akkumulator integriert werden.

Vorteilhaft ist es bei einem erfindungsgemäßen Akkumulator, wenn um den Stapel ein Spannband angeordnet ist. Da der Stapel ohne weitere Maßnahmen relativ instabil ist und in der Regel innerhalb des Akkumulators kein Druck aufgebaut werden kann, wird erfindungsgemäß ein Spannband um den Akkumulator gelegt, welches diesen zusammenhält und überdies die inneren Druckkräfte aufnimmt. Selbstverständlich können auch mehrere Spannbänder um den Akkumulator gelegt werden. Spannbänder, um Zellen eines Akkumulators zusammenzuhalten, sind an sich bekannt. Beispielsweise offenbart die JP 2003323874A dazu eine Anordnung bei der mehrere Zellen durch ein gespanntes Band zusammengehalten werden. Im Unterschied zur vorliegenden Erfindung variiert bei der JP 2003323874A jedoch die Länge des Stapels und damit die Länge des Bandes. Bei der vorliegenden Erfindung bleibt die Länge des außenliegenden Bandes dagegen gleich. Es können daher Bänder aus Materialien mit vergleichsweise hohem Elastizitätsmodul verwendet werden. Vorzugsweise werden diese Bänder hinsichtlich ihres thermischen Ausdehnungskoeffizienten an die thermischen Ausdehnungseigenschaften des Stapels angepasst.

Vorteilhaft ist es bei einem erfindungsgemäßen Akkumulator, wenn das Spannband aus einem der Materialien: Gummi, Metall, Kunststoff, faserverstärkter Kunststoff besteht.

Beispielsweise bietet Gummi den Vorteil, dass das Band ohne weitere Maßnahmen um den Akkumulator gelegt werden kann und dort eine Kraft aufbaut. Metalle sind dagegen nicht so elastisch und werden vorteilhaft mit einer Vorrichtung gespannt und fixiert. Dafür können sie wesentlich höhere Kräfte aushalten als Gummi. Kunststoffe bieten einen guten Mittelweg an.

Vorteilhaft ist es bei einem erfindungsgemäßen Akkumulator, wenn das Spannband ein Spannschloss aufweist. Auf diese Weise können die Bänder gut gespannt werden, insbesondere jene aus Materialien mit relativ hohem Elastizitätsmodul.

Vorteilhaft ist es bei einem erfindungsgemäßen Akkumulator, wenn Haltelaschen vorgesehen sind, welche zwischen einem Spannband und einem Grundelement oder Deckelelement eingeklemmt sind. Um den Akkumulator in einem Fahrzeug oder einem mit Energie zu versorgenden Gerät fixieren zu können, werden bei dieser Variante vorteilhaft Haltelaschen zwischen Spannband und einem Grundelement oder Deckelelement eingeklemmt. Auf diese Weise können die Laschen besonders leicht an verschiedene Positionen angeordnet werden beziehungsweise können verschiedene Haltelaschen für ansonsten baugleiche Akkumulatoren verwendet werden. Der Akkumulator kann somit besonders gut an verschiedene Einbausituationen angepasst werden.

Vorteilhaft ist es bei einem erfindungsgemäßen Akkumulator, wenn über den Stapel vertikal reichende Zugelemente, insbesondere Gewindestangen, vorgesehen sind, welche für den Zusammenhalt des Stapels bestimmt sind. Gewindestangen, welche vertikal (das heißt quer zur Trennebene der einzelnen Module) angeordnet sind, sind ebenfalls sehr gut geeignet, um den Stapel zu stabilisieren beziehungsweise um innere Drücke des Akkumulators aufzunehmen. Durch einfaches Ablängen können sie noch dazu sehr einfach an verschieden hohe Stapel angepasst werden. Am unteren und am oberen Ende wird der Stapel dann mit einer Mutter zusammengespannt.

Vorteilhaft ist es bei einem erfindungsgemäßen Akkumulator, wenn eine horizontal über den Stapel reichende Brücke vorgesehen ist, insbesondere aus Flachmaterial, einem U-Profil oder einem Rohrprofil, welches an den Enden Elemente zur Aufnahme der Zugelemente aufweist, insbesondere Löcher zur Aufnahme einer Gewindestange. Wenn der Akkumulator keine Löcher zur Aufnahme einer Gewindestange aufweist beziehungsweise auch zur besseren Kraftverteilung kann eine Brücke horizontal (das heißt in Richtung der Trennebene der einzelnen Module) über den Stapel vorgesehen werden. Eine obere und eine untere Brücke werden dann wiederum mit Hilfe von Gewindestangen und Muttern gegeneinander gespannt und halten so den Stapel sicher zusammen.

Vorteilhaft ist es bei einem erfindungsgemäßen Akkumulator, wenn Haltelaschen vorgesehen sind, welche zwischen einer Brücke und einem Grundelement oder Deckelelement eingeklemmt sind. Auch bei dieser Variante sind Haltelaschen einsetzbar. Auf diese Weise können die Laschen wiederum leicht an verschiedene Positionen angeordnet werden beziehungsweise können verschiedene Haltelaschen für ansonsten baugleiche Akkumulatoren verwendet werden. Der Akkumulator kann somit besonders gut an verschiedene Einbausituationen angepasst werden.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
Figur 1 einen Ausschnitt aus einem Stapel von Einzelzellen mit dazwischen liegender Kühl-/Heizplatte;
Figur 2 einen weiteren Ausschnitt aus einem Stapel von Einzelzellen, die an ihrem Rand jeweils einen Falz aufweisen;
Figur 3 ein Kühl-/Heizelement von oben;
Figur 4 eine Draufsicht auf ein Kühl-/Heizelement mit eingelegter oder angespritzter Dichtung;
Figur 5 einen Schnitt durch einen Stapel mehrerer Einzelzellen mit dazwischen angeordneten Kühl-/Heizelementen;
Figur 6 ein Kühl-/Heizelement mit einer Strömungsblende im Zulauf einer Kühlfläche;
Figur 7 eine Variante eines Kühl-/Heizelements mit einer Zulaufblende und einer Ablaufblende;
Figur 8 einen Stapel von zwei identischen Kühl-/Heizelementen;
Figur 9 ein Kühl-/Heizelement aus Blech;
Figur 10 Federkennlinien verschiedener Tellerfedern;
Figur 11 eine Volumenausgleichsanordnung mit einem flexiblen Behälter;
Figur 12 eine Volumenausgleichsanordnung mit einem starren Behälter;
Figur 13a ein Grundelement von unten;
Figur 13b ein Grundelement von oben;
Figur 14 eine erste Ausführungsform einer Zelle;
Figur 15 eine zweite Ausführungsform einer Zelle;
Figur 16 eine Akkumulator-Trenn-Einheit;
Figur 17 einen halbfertigen Paketakkumulator in Schrägansicht;
Figur 18 einen halbfertigen Paketakkumulator in Frontansicht;
Figur 19 eine Akkumulator-Verwaltungs-Einheit;
Figur 20 ein Sicherungsmodul mit zusätzlichen Stromsensoren und Hochvolt-Steckern;
Figur 21 einen fertigen Paketakkumulator in Schrägansicht;
Figur 22 den oberen Bereich eines Paketakkumulators mit Befestigungslaschen;
Fig. 23 eine erste Variante eines Kanals zur Abfuhr heißer Brenngase;
Fig. 24 eine zweite Variante eines Kanals zur Abfuhr heißer Brenngase.

### DETAILIERTE BESCHREIBUNG DER ERFINDUNG

### Kühlung:

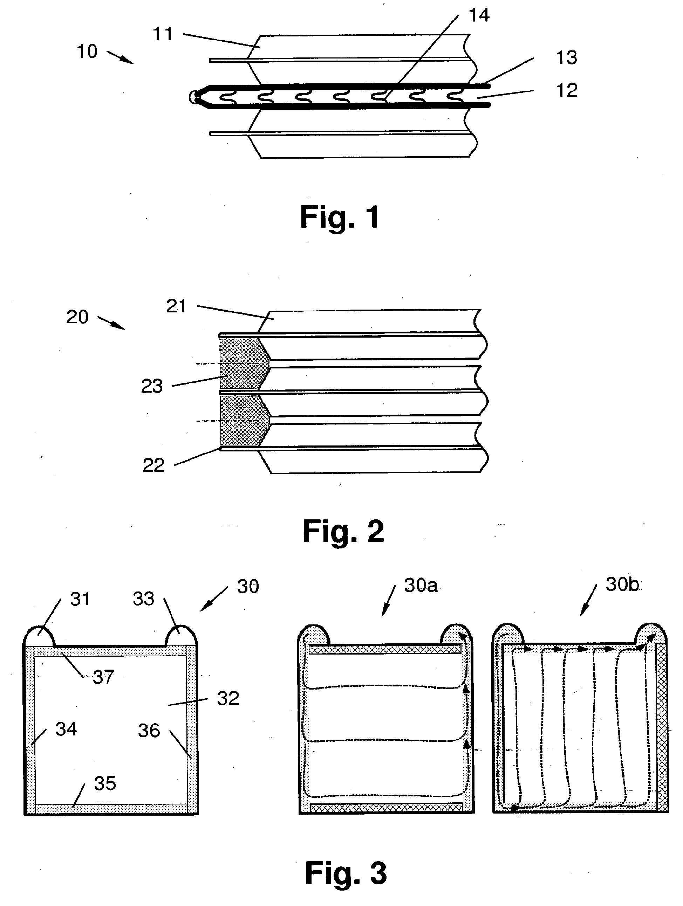

Für eine optimale Funktion des Akkumulators werden die Zellen desselben gekühlt oder beheizt, um eine optimale Betriebstemperatur einzuhalten. Wenn die Zellen eines Akkumulators flächig ausgebildet sind, kann deren Temperierung über die vergleichsweise großen ebenen Flächen des Akkumulators erfolgen. Das kann beispielsweise durch Aluminium Platten erreicht werden, welche die Wärme zum Rand der Zelle führen. Eine weitere Möglichkeit sind Platten oder Beutel, die von einem Kühlmedium durchflossen werden. Fig. 1 zeigt dazu einen Ausschnitt aus einem Stapel 10 von Einzelzellen 11, zwischen denen jeweils eine Kühl-/Heizplatte 12 angeordnet ist. Die Kühl-/Heizplatte 12 weist Begrenzungen 13 auf, die über flexible Stege 14 miteinander verbunden sind. In einer konkreten Ausführung eines solchen Stapels 10 wurde zur Kühlung ein Kühlwasserstrom von ca. 3g/s vorgesehen, der durch einen ca. 0,2 mm breiten Spalt innerhalb der Kühl-/Heizplatte 12 fließt. Dabei entsteht ein Druckabfall von ca. 7 kPa. Dieselbe Strömung kann auch zum Heizen der Zellen Verwendung finden.

Damit die Kühl-/Heizplatte 12 in wärmeleitfähiger Verbindung zu den Zellen 11 steht, kann der gesamte Kühlwasserkreislauf unter Druck gesetzt werden (z.B. auf ca. 2 bar aufgepumpt werden). Damit die Presskräfte auf die Zelle wirken können, sollten die Begrenzungen 13 der Kühl-/Heizplatte 12 eine Bewegungsfreiheit aufweisen. Die Begrenzungen 13 sollten daher nur am Rand miteinander verbunden sein oder flexible Stege aufweisen. Da die Presskräfte direkt auf die Zelle übertragen werden benötigt man für die Begrenzungen 13 oder Wände nur sehr dünne Materialstärken wie z.B. 1mm Kunststoff oder 0,2 mm Blech.

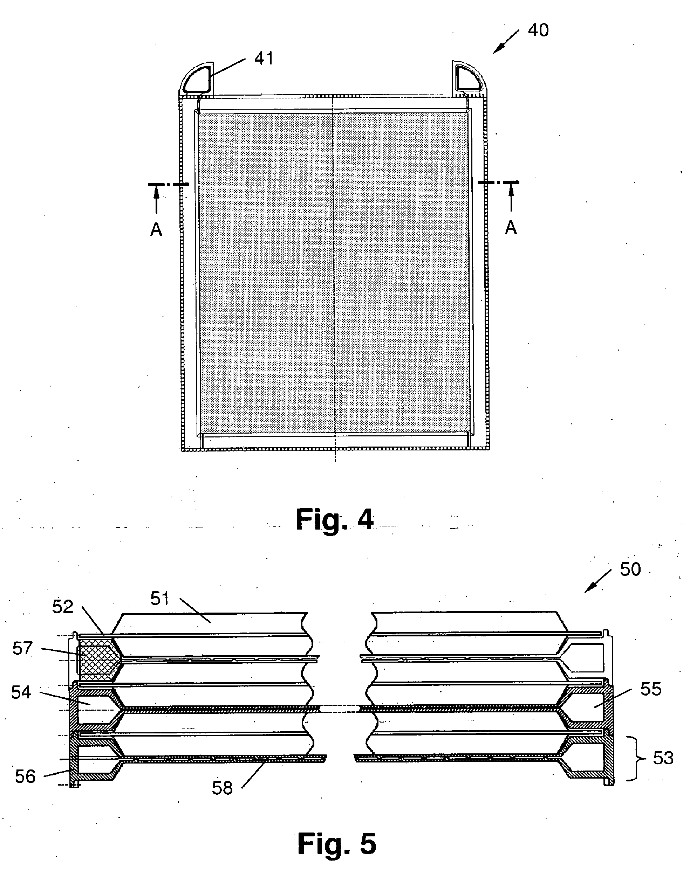

Fig. 2 zeigt einen weiteren Ausschnitt aus einem Stapel 20 von Einzelzellen 21, die an ihrem Rand jeweils einen Falz 22 aufweisen. Vorteilhaft wird der Raum 23 zwischen den Zellen 21 für die Zufuhr und/oder Abfuhr eines Kühlmediums genutzt (siehe hierzu auch Fig. 3 und Fig. 5).

Fig. 3 zeigt ein Kühl-/Heizelement 30 von oben. Das Kühl-/Heizelement 30 umfasst einen Zulauf 31, eine Kühlfläche 32 sowie einen Ablauf 33. Über die vier Seitenkanten der Kühlfläche 34, 35, 36 und 37 sind verschiedene Möglichkeiten denkbar, wie das Kühlmedium vom Zulauf 31 über die Kühlfläche 32 zum Ablauf 33 gelangen kann. Stellvertretend sind in der Fig. 3 zwei Varianten dargestellt. Bei einer ersten Variante wird ein Kühl-/Heizelement 30a von links nach rechts also von der Seitenkante 34 zur Seitenkante 36 durchflossen. Bei einer zweiten Variante wird ein Kühl-/Heizelement 30b von unten nach oben, also von der Seitenkante 35 zur Seitenkante 37 durchflossen. Selbstverständlich sind noch viele andere Varianten denkbar, insbesondere auch eine mäanderförmige Anordnung der Kühlkanäle. Die Kühl-/Heizelemente 30, 30a, 30b können übereinander gestapelt werden, wobei sich durch die übereinander zu liegen kommenden Zuflüsse 31 und Abflüsse 33 je eine durchgehende Zu- und Ableitung ergibt. Um die Dichtheit zu gewährleisten, können auch Dichtungen vorgesehen werden, die beispielsweise aus dem Material des Kühl-/Heizelements 30, 30a, 30b, einer angespritzten Dichtung oder einer eingelegten Dichtung besteht. Schließlich können die Kühl-/Heizelemente 30, 30a, 30b (gruppenweise) miteinander verklebt werden. Als konkretes Ausführungsbeispiel zeigt Fig. 4 eine Draufsicht auf ein Kühl-/Heizelement 40 mit eingelegter oder angespritzter Dichtung 41.

Fig. 5 zeigt einen Schnitt AA durch einen Stapel 50 mehrerer Einzelzellen 51 mit dazwischen angeordneten Kühl-/Heizelementen 53. Die Einzelzellen 51 sind wie in Fig. 1 mit einem Falz 52 versehen. Die Kühl-/Heizelemente 53 weisen einen Zulauf 54 und einen Ablauf 55 auf. In einer Variante der Erfindung ist der Rand 56 des Kühl-/Heizelement 53 so hoch ausgeführt, dass zwischen den Zellen 51 ein bestimmter Mindestabstand sichergestellt werden kann und die Kühlflächen 58 der Kühl-/Heizelemente 53 nicht übermäßig zusammengedrückt werden können.

Die Zellen 51 können nämlich nicht mehr weiter aufeinander zübewegt werden, sobald sie mit ihrem Falz 52 auf dem Rand 56 beziehungsweise dem Zulauf 54 oder Ablauf 55 anliegen.

Aus der Fig. 5 wird auch deutlich, wie der zwischen den Zellen 51 verbleibende Raum 57 durch die Zuläufe 54 und Abläufe 55 genützt werden kann. Alternativ oder zusätzlich können Abstandshalter in einer Kühlfläche 58 selbst integriert sein. Die Abstandshalter können dabei in die Begrenzungen nur auf einer Seite oder auf beiden Innenseiten des Kühl-/Heizelements 53 integriert sein oder aber auch beispielsweise durch ein gesondertes Bauteil (nicht dargestellt) realisiert sein, z.B. ein eingelegtes Gitter oder Geflecht oder flexible Stege. Auch die zu Fig. 1 erwähnten flexiblen Stege 14 können so gestaltet sein, dass eine bestimmte Restspaltbreite auch bei relativ hohen auf das Kühl-/Heizelement 53 wirkenden Kräften gewährleistet wird und die Stege 14 somit auch die Abstandshalter-Funktion erfüllen. Bei den Stegen 14 aus Fig. 1 ist dies gewährleistet, da die Laschen der Stege 14 bei übermäßiger Krafteinwirkung aufeinander zu liegen kommen und de facto nicht mehr weiter zusammengedrückt werden können. Die beiden Begrenzungen einer Kühlfläche können schließlich auch so ausgebildet sein, dass eine starr ausgeführt ist und die andere flexibel aufgehängt ist. Damit wird eine bessere, stabile Positionierung der Zellen 51 im Stapel erreicht.

### Feuerfeste Isolation:

Bei Überhitzung, Überladung oder sonstigem unsachgemäßem Gebrauch kann es zu einem sogenannten "Thermal Runaway" kommen. Dabei wird die gesamte in einer Zelle 51 gespeicherte chemische und elektrische Energie innerhalb von 5 bis 25 Sekunden umgesetzt. Dadurch entstehen lokal sehr hohe Temperaturen von über 700°C, die wegen der gewünschten hohen Packungsdichte der Zellen 51 die beiden benachbarten Zellen 51 im selben Modul (häufig sind diese Module aus ca. 12 Zellen aufgebaut) entzündet. Sind mehrere Module derart nebeneinander angeordnet, dass der Feuerball der ersten durchgegangenen Zelle 51 eine oder mehrere Zellen 51 der Nachbarmodule entzündet, entsteht eine Kettenreaktion.

Im Fall eines Thermal Runaways sollte die Ausbreitung des Brandherdes auf benachbarte Zellen 51 im Zellenstapel 50 oder auch auf benachbarte Zellstapel nach Möglichkeit unterbunden werden. Dazu werden die Kühl-/Heizelemente 53 vorteilhaft aus Metallblech hergestellt. Die vorhandene Wasserkühlung kann, wenn eine an die Kühl-/Heizelemente 53 angeschlossene Umlaufpumpe läuft, die anfallende Wärmeenergie abführen. Um die Wärmebelastung auf die Kühl-/Heizelemente 53 dennoch möglichst gering zu halten, kann zwischen den Zellen 51 und den Kühl-/Heizelementen 53 ein feuerfestes Flies (hitzebeständiges, flammhemmendes oder feuerfestes Gewebe beziehungsweise Papier - nicht dargestellt) eingelegt sein. Dieses fungiert als zusätzliche thermische Isolation gegen sehr hohe Temperaturen und reduziert damit die Wärmeübertragung von der brennenden Zelle 51 zum Kühl-/Heizelement 53 auf ein erträgliches Maß. So kann der Brand auf diese eine Zelle 51 beschränkt werden. Im Normalbetrieb ergibt sich wegen der im Vergleich zum Thermal Runaway nur sehr geringen thermischen Leistung (nur ca. 1 % vom Thermal Runaway) keine oder keine wesentliche Einschränkung der Wärmeübertragung von der Zelle 51 zum Kühl-/Heizelement 53.

Die hitzebeständige, flammhemmende oder feuerfeste Schicht kann dabei umso dünner dimensioniert werden, je geringer deren thermische Leitfähigkeit ist. Unter normalen Bedingungen ist die von der Zelle 51 in das Kühlsystem übertragene Wärmeleistung kleiner 0,2kW/m2 und verursacht an der besagten Schicht einen Temperaturabfall von ca. 2°C. Im Fall eines thermal Runaways kann eine Wärmeleistung bis 20 kW/m2 auftreten die an dieser Schicht einen erwünschten hohen Temperaturabfall von ca. 200°C verursacht. Das Kühlwasser neben der brennenden Zelle 51 wird dabei auf 100°C erhitzt - durch den Kühlkreislauf wird diese Energie dann gleichmäßig auf die gesamte Masse der Batterie verteilt ohne dass dabei kritische Temperaturwerte erreicht werden.

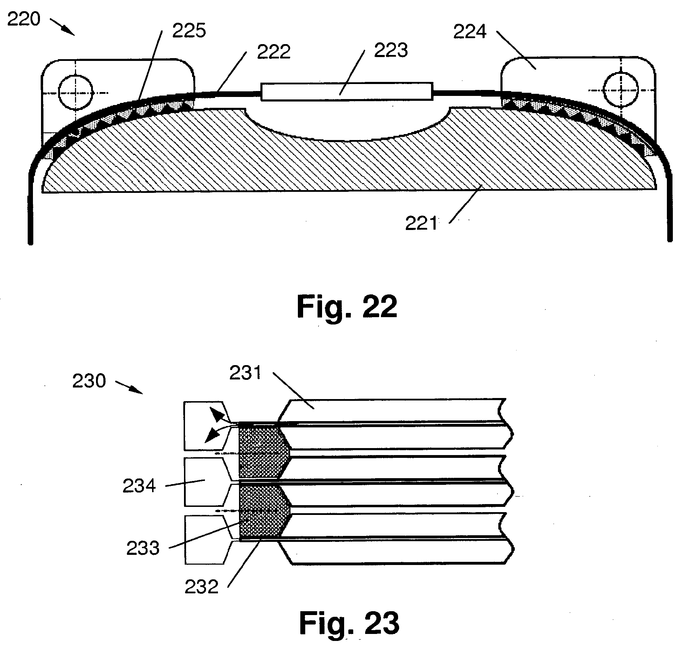

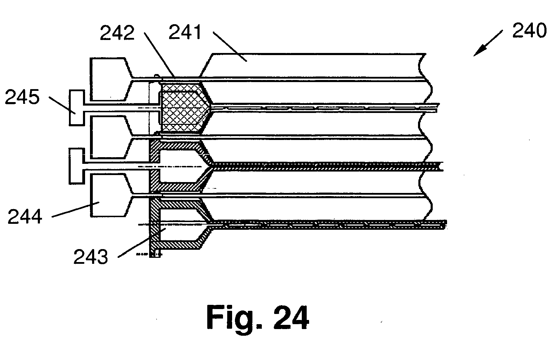

Die Abfuhr der heißen Brenngase kann über mit einem Kühlmedium gekühlte Kanäle erfolgen die seitlich in den Kühl-/Heizelementen 53 integriert sind (nicht dargestellt - siehe auch die Figuren 23 und 24).

### Strömung in der Kühlfläche:

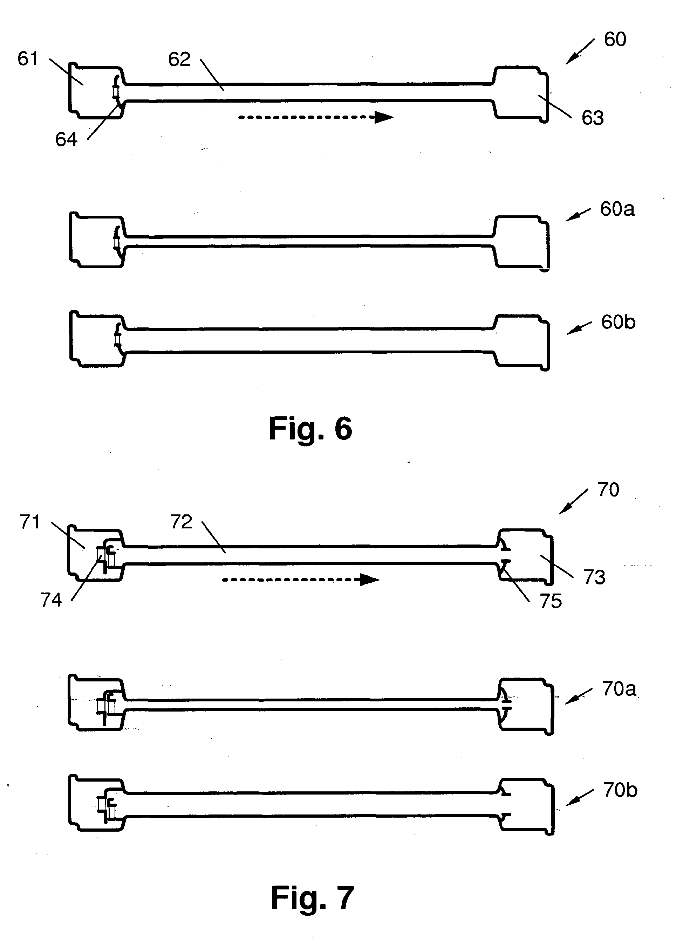

Wenn sich der Spalt in der Kühlfläche vergrößert, so fliest mehr Kühlmedium durch diesen Spalt oder diese Kapillare als durch eng gebliebene Kapillaren. Dies führt zu einer an sich unerwünschten ungleichmäßigen Wärmeab- oder -zufuhr. Diesem Effekt kann man entgegensteuern indem man eine Strömungsblende mit gleichbleibendem, von der Bewegung der Begrenzungen der Kühl-/Heizfläche unabhängigem, Querschnitt vorsieht. Diese wird vorzugsweise auf der Zulaufseite integriert. Fig. 6 zeigt dazu ein Kühl-/Heizelement 60 mit einem Zulauf 61, einer Kühlfläche 62 und einem Ablauf 63. Weiterhin umfasst das Kühl-/Heizelement 60 eine Strömungsblende 64, welche eine Öffnung mit einem Querschnitt aufweist, der unabhängig von der Spaltdicke in der Kühlfläche 62 im Wesentlichen konstant bleibt. Fig. 6 zeigt hierzu ein Kühl-/Heizelement 60a mit reduziertem Querschnitt und ein Kühl-/Heizelement 60b mit erweitertem Querschnitt. Deutlich zu sehen ist, dass die Öffnung der Strömungsblende 64 und damit der Durchfluss des Kühlmediums durch die Kühlfläche 62 im Wesentlichen gleich bleibt.

Fig. 7 zeigt eine weitere Variante eines Kühl-/Heizelements 70 mit einem Zulauf 71 einer Kühlfläche 72, einem Ablauf 73, einer Zulaufblende 74 und einer Ablaufblende 75. Wenn sich die Spaltdicke der Kühlfläche 72 verringert, dann wird die Zulaufblende 74 weiter geöffnet und die Ablaufblende 75 weiter geschlossen (siehe dazu Kühl-/Heizelement 70a). Wenn sich die Spaltdicke der Kühlfläche 72 vergrößert, dann wird die Zulaufblende 74 verengt und die Ablaufblende 75 aufgeweitet (siehe hierzu Kühl-/Heizelement 70b). Auf diese Weise wird erreicht, dass in einem relativ engen Spalt ein relativ hoher Druck herrscht, da der Druckabbau ja erst bei der Ablaufblende 75 erfolgt. Der hohe Druck bewirkt nun aber, dass sich die Spaltdicke im Kühl-/Heizelement 70 vergrößert. Bei einem relativ weiten Spalt wird der Druck jedoch bereits bei der Zulaufblende 74 abgebaut, sodass im Spalt selbst ein relativ niedriger Druck herrscht. Der niedrige Druck bewirkt nun, dass sich die Spaltdicke im Kühl-/Heizelement 70 verringert. Es entsteht gewissermaßen eine hydraulische Regelung der Spaltdicken der einzelnen, in einem Zellenstapel angeordneten Kühl-/Heizelemente 70.

### Verzahnung:

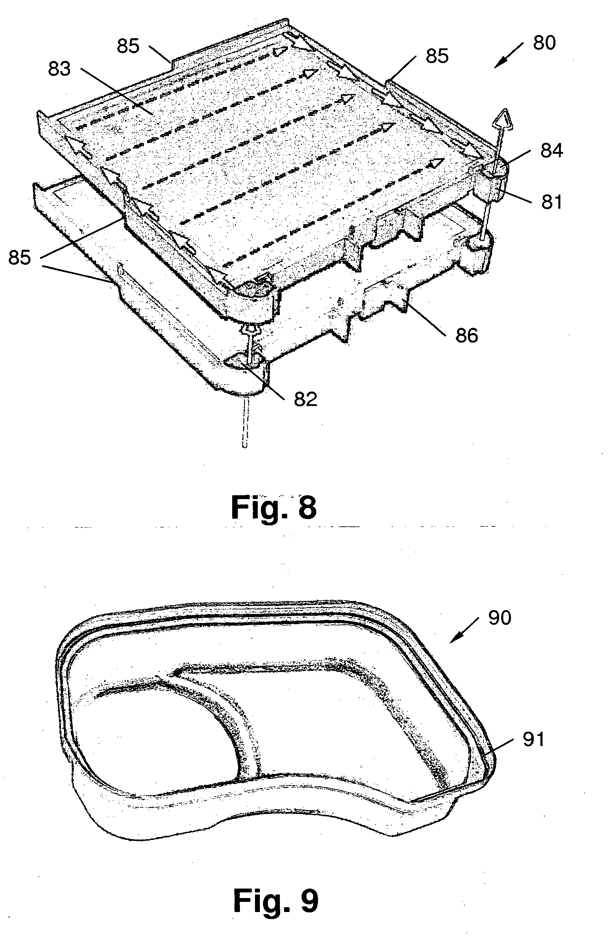

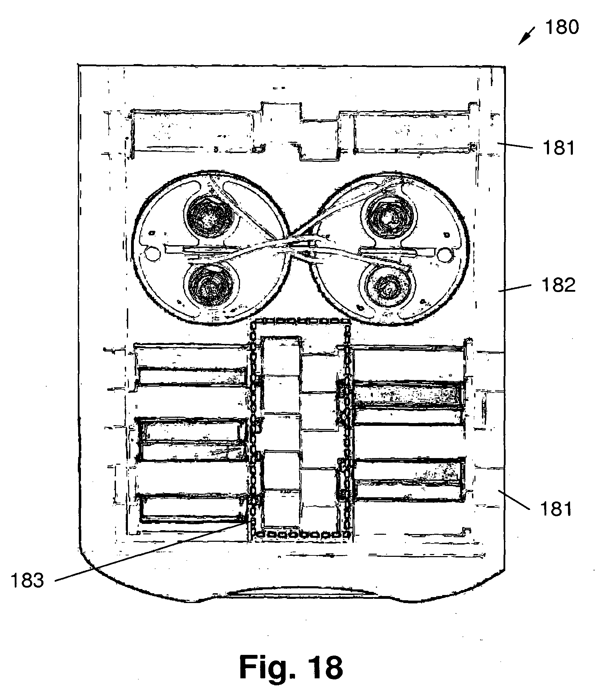

Fig. 8 zeigt einen Stapel 80 von zwei identischen Kühl-/Heizelementen 81 (hier in Kunststoff ausgeführt). Jedes Kühl-/Heizelement 81 umfasst einen Zulauf 82, eine Kühlfläche 83 und einen Ablauf 84. Für einen besseren Zusammenhalt des Stapels 80 weist jedes Kühl-/Heizelement auch eine Verzahnung 85 auf, die ein Verrutschen der Kühl-/Heizelemente 81 im Stapel 80 verhindert. Vorzugsweise kann die Verzahnung 85 Schubkräfte in jeder Richtung übertragen. Sie kann ein- oder mehrreihig versetzt angeordnet sein. Weiterhin ist die Verzahnung 85 in einer besonders vorteilhaften Ausführungsform selbstverrastend (unlösbar oder wieder lösbar) ausgeführt. Dies vereinfacht die Montage, insbesondere wenn die einzelnen Kühl-/Heizelement miteinander verklebt werden, da so ein Gegeneinanderpressen der Teile bis zum Aushärten des Klebstoffs durch eine gesonderte Einrichtung entfallen kann. Die Verrastung kann z.B. trapezförmig ausgeführt sein. Bevorzugt ist die Verzahnung 85 mäanderförmig ausgeführt, um Kerbwirkungen zu vermeiden. In der Fig. 8 ist jeweils nur eine Zahnflanke je Seite ausgeführt. Vorteilhaft sind aber je Seite viele Zahnflanken ausgeführt. Beispielsweise sind die Zähne 2-5 mm breit. Schließlich umfasst eine Kühl-/Heizelement 81 auch eine Befestigungslasche 86 für einen Zellenüberwachumasschaltung auf (siehe hierzu auch Fig. 18). Vorteilhaft umfassen die Befestigungslaschen 86 Rasten zur Befestigung und Kodierungsrippen zur korrekten Positionierung der Zellenüberwachungsschaltungen entlang der Kühl-/Heizelemente 81 auf.

In einer konkreten Ausführungsform wurden die Kühl-/Heizelemente 81 aus Kunststoff hergestellt, wobei die Wandstärke am Rand etwa 1,5-2 mm, am Wannenboden etwa 0,6 mm betrug. Das Material ist Dauerfest mit 6-7 N/mm2 bei -40 C bis 85 °C beziehungsweise dauerfest und dicht für Wasser und/oder Glykol bei 2 bar und einer Temperatur von -40 C bis 85 °C. Vorteilhaft sollte der Kunststoff kurzzeitig und einmalig auch höheren Temperaturen von über 200°C widerstehen.

Fig. 9 zeigt ein alternatives Kühl-/Heizelement 90, welches aus Blech hergestellt (tiefgezogen) ist. Zum Stapeln der einzelnen Kühl-/Heizelemente 90 umfasst dieses auch eine Dichtung 91. In einer konkreten Ausführungsform wurde der obere Bereich aus 0,6 mm, der Wannenbereich aus 0,2 mm starkem Material hergestellt. Bevorzugt ist das Blech antikorrosionsbeschichtet.

### Kühlmedium:

Vorteilhaft weist das Kühlmedium eine hohe spezifische Wärmekapazität auf, ist frostgeschützt, ist für die eingesetzten Materialien nicht korrosiv, weist eine geringe Oberflächenspannung auf und ist schmutzlösend (unter Schmutz sind in diesem Zusammenhang auch gelöste Gase oder Gasblasen zu verstehen). Diese Eigenschaften können auch durch Zusatz von geeigneten Stoffen (z.B. Frostschutzmittel, Tensid, Antikorrosionsmittel, etc.) zu einer oder mehreren Grundsubstanzen erreicht werden. Da der Zellstapel in den gezeigten Anordnungen schwimmend gelagert ist, das heißt quasi in dem Kühlmedium "schwimmt", sind die Zellen vor Erschütterungen und hohen Beschleunigungen geschützt. Bevorzugt weist das Kühlmedium dazu eine hohe Dichte auf beziehungsweise wird unter entsprechend hohen Druck gesetzt. Das Kühlmedium ist vorteilhaft flüssig, kann natürlich aber auch gasförmig sein.

### Volumenausgleich:

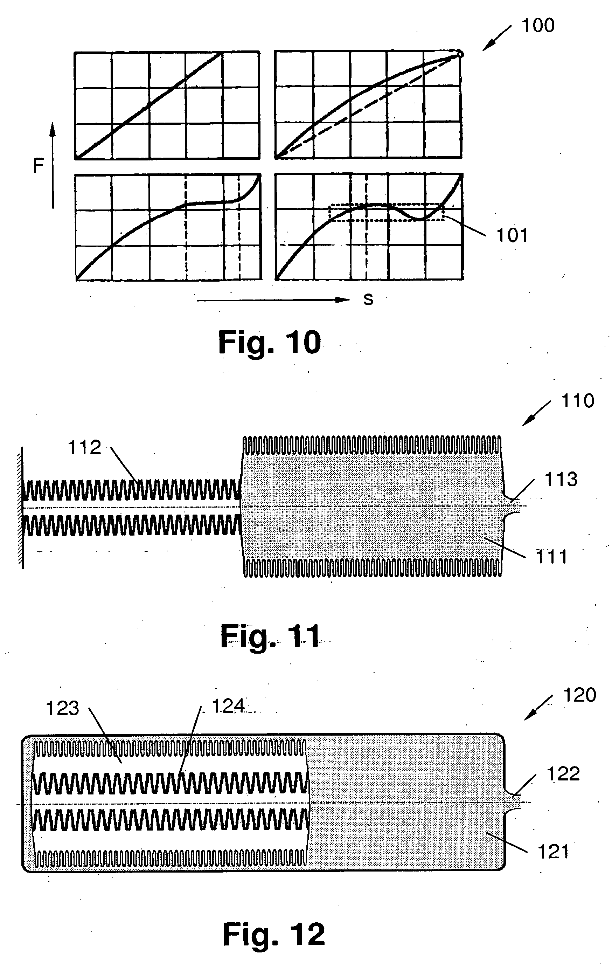

Da die Dicke einer Zelle Toleranzen aufweist und sich diese beim Laden oder Entladen noch dazu periodisch ändert, ist ein Behälter für den Volumenausgleich vorteilhaft. Darüber hinaus ist es vorteilhaft, wenn auch ein Behälter zum Auffangen der in dem Kühlmedium enthaltenen Gasblasen vorgesehen ist. Das können zwei verschiedene Behälter oder ein und derselbe Behälter sein. Damit die Zellen unter einem gleichmäßigen Druck stehen , wird das gesamte Kühlsystem unter Druck gesetzt. Dieser kann vor jedem Betrieb der Zellen über eine kleine Pumpe erfolgen, welche das Kühlmedium aus einem Vorratsbehälter in die Kühl-/Heizelemente drückt, oder das gesamte System wird nach dem Zusammenbau fabrikmäßig unter Druck gesetzt. Damit sich der Druck bei Temperaturschwankungen oder Ladungsänderung der Zellen (dadurch ändert sich ja die Dicke der Zellen) möglichst nicht ändert, steht der Volumenausgleichsbehälter vorteilhaft unter mechanischem Druck, der vorzugsweise mit Hilfe von Tellerfedern realisiert wird. Tellerfedern lassen eine geeignete Wahl der Federkennlinie zu, die über einen größeren Hub eine annähernd konstante Kraft erzeugt. Fig. 10 zeigt dazu Federkennlinien 100 verschiedener Tellerfedern. Dabei ist die Kraft F über dem Weg s aufgetragen. Die Tellerfedern unterscheiden sich durch unterschiedliche Verhältnisse von Materialdicke zur Höhe der Tellerfeder. Durch geeignete Wahl kann nun eine über einen längeren Weg s nahezu konstante Kraft F erreicht werden. Im rechten unteren Diagramm ist dazu ein vorteilhafter Kennlinienbereich 101 eingezeichnet, welcher von etwa 25% bis 90% des Federweges s reicht.

Fig. 11 zeigt nun eine erste Variante einer Volumenausgleichsanordnung 110 bestehend aus einem flexiblen Behälter 111 und mehreren Tellerfedern 112, welche eine mehr oder minder konstante Kraft auf den Behälter 111 ausüben. Im vorderen Bereich des Behälters 111 befindet sich eine Öffnung 113, über den der Behälter 111 an den Kühlkreislauf angeschlossen werden kann.

Fig. 12 zeigt eine zweite Variante einer Volumenausgleichsanordnung 120, bestehend aus einem starren Behälter 121 mit einer Öffnung 122 zum Anschluss an den Kühlkreislauf. Im Behälter 121 ist ein flexibler Behälter 123 angeordnet, der über Tellerfedern 124 einen Druck auf die im Behälter 121 enthaltene Flüssigkeit ausübt. Denkbar ist natürlich auch, anstelle des flexiblen Behälters 123 einen Kolben vorzusehen, auf den die Tellerfedern 124 wirken. In einer konkreten Ausführungsform wurde der Volumenausgleichsbehälter mit einem Durchmesser von 65 mm und einer Länge von 220 mm ausgeführt, womit sich ein Volumen von etwa 730 cm³ ergibt. Der Behälter ist druckfest für einen Nenndruck von ca. 2 bar. Für die Druckerzeugung wurden ca. 100 Stück Tellerfedern mit einem Durchmesser von 25 mm, einer Höhe von 1,4 mm und einer Materialstärke von 1 mm vorgesehen. Die Tellerfedern können aus Metall oder Kunststoff bestehen. Der flexible Behälter 123 wurde schließlich mit einem Durchmesser von 63 mm und einer Länge von 150 mm ausgeführt und besteht aus Blech.

### Grundelement:

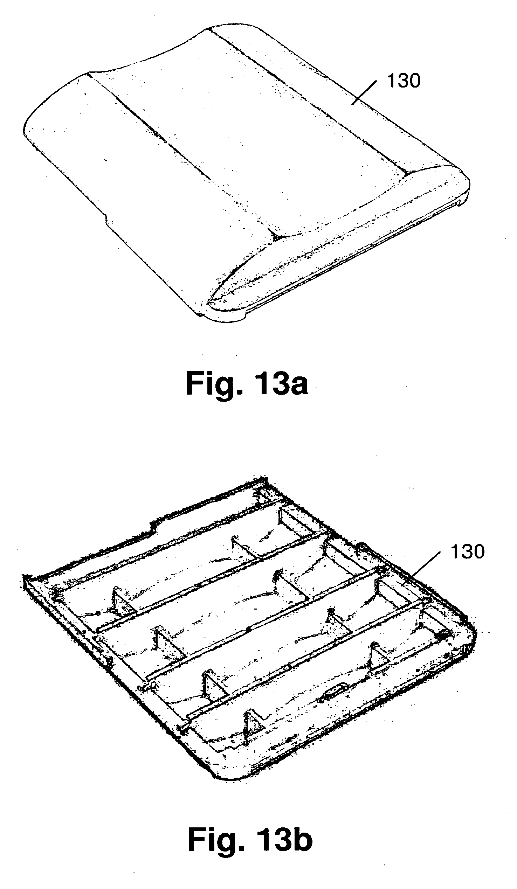

Die Figuren 13a und 13b zeigen ein Grundelement 130 von unten (Fig. 13a) und von oben (Fig. 13b). Im zusammengebauten Zustand befindet sich die in Fig. 13a sichtbare Fläche außen und die in Fig. 13b sichtbare Rippenstruktur innen. Das Grundelement 130, das außen eine Oberfläche aufweist, die zur geeigneten Kraftverteilung gewölbt ist, wird zum Aufbau des (Paket)Akkumulators verwendet. Vorteilhaft ist die Oberfläche derart gewölbt, dass für den Zusammenbau später verwendete Spannbänder eine auf die Grundfläche gleichmäßige Kraftverteilung bewirken. Damit das Spannband gespannt werden kann und Spannschlösser zur Verbindung der Enden des Spannbands Platz finden, ist die Oberfläche in der Mitte konkav gewölbt. Auch dabei erfolgt eine auf die Fläche gleichmäßige Krafteinleitung. Die Oberfläche ist in der dargestellten Ausführungsform nur in einer Richtung gewölbt. In einer weiteren Ausführungsform kann die Oberfläche aber auch in beide Richtungen gewölbt sein, sodass sich eine 3D-Wölbung ergibt. Von der Oberfläche werden die Kräfte von direkt über den Spannbändern positionierten Rippen zum untersten Kühl-/Heizelement geführt. Damit die Kraftverteilung auf die Oberfläche des untersten Kühl-/Heizelements gleichmäßig erfolgt, ist eine zusätzliche, dazwischen liegende steife Platte vorteilhaft. In einer Variante wird das Deckelement gleich oder im Wesentlichen gleich wie das Grundelement 130 aufgebaut.

### Anschlüsse der Zellen:

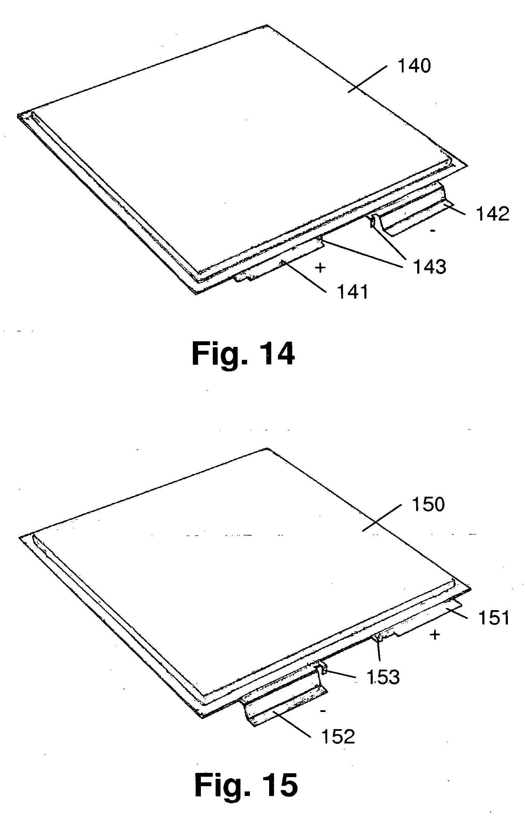

Fig. 14 zeigt eine erste Ausführungsform einer Zelle 140 mit einem positiven Anschluss 141 und einem negativen Anschluss 142, über welche die elektrische Leistung zu- und abgeführt wird. Zusätzlich sind Abzweigungen 143 vorhanden, über die eine elektronische Schaltung zur Überwachung der Zelle 140 angeschlossen werden kann. Die Abzweigungen 143 können als ebene Kontakte für eine spätere leitfähige Verklebung oder als Steckerpins ausgeführt sein. Für die Verbindung mehrerer Zellen 140 sind die Anschlüsse 141 und 142 gebogen beziehungsweise gekröpft ausgeführt. Der positive Anschluss 141 ist hier in der Fig. 14 nach oben, der negative Anschluss 142 nach unten gebogen.

Damit die Zellen 140 ohne Zwischenelemente direkt miteinander verbunden werden können sind zwei Biegevarianten erforderlich - eine "linke" und eine "rechte" Variante. Fig. 15 zeigt dazu eine Zelle 150, die spiegelbildlich zur Zelle 140 aus Fig. 14 gestaltet ist. Die Zelle 150 umfasst analog einen positiven Anschluss 151 und einen negativen Anschluss 152, über welche die elektrische Leistung zu- und abgeführt wird. Der positive Anschluss 151 ist nach oben, der negative Anschluss 152 nach unten gebogen. Zusätzlich sind wiederum Abzweigungen 153 vorhanden, über die eine elektronische Schaltung zur Überwachung der Zelle 150 angeschlossen werden können.

Im gezeigten Beispiel sind die Abzweigungen 143 und 153 sowohl bei den positiven Anschlüssen 141 und 151 als auch bei den negativen Anschlüssen 142 und 152 angeordnet. Im zusammengebauten Zustand, das heißt nach dem Stapeln der Zellen 140 und 150, sind somit doppelt so viele Abzweigungen 143 und 153 vorhanden wie eigentlich erforderlich wären. In einer alternativen Ausführungsform sind die Abzweigungen 143 und 153 daher nur bei den positiven Anschlüssen 141 und 151 oder nur bei den negativen Anschlüssen 142 und 152 angeordnet (gilt für Serienschaltung der Zellen 140 und 150).

Die Verbindung der Zellen 140 und 150 kann nun ohne weitere Elemente erfolgen, beispielsweise durch Schweißen, insbesondere Ultraschallschweißen beziehungsweise Ultraschallkompaktieren, oder durch chemisch, reaktive Verbindung. Die Zellen 140 und 150 sind für Serienschaltung vorgesehen. Für eine Parallelschaltung wären andere Biegevarianten vorzusehen. Die Parallelschaltung mehrerer Module (d.h. mehrerer in Serie geschalteter Zellen 140 und 150) kann auch über längere Anschlüsse oder mit Hilfe gesonderter Brückenbleche (z.B. aus Aluminium oder Kupfer) erfolgen.

### Aufbau eines Paketakkus

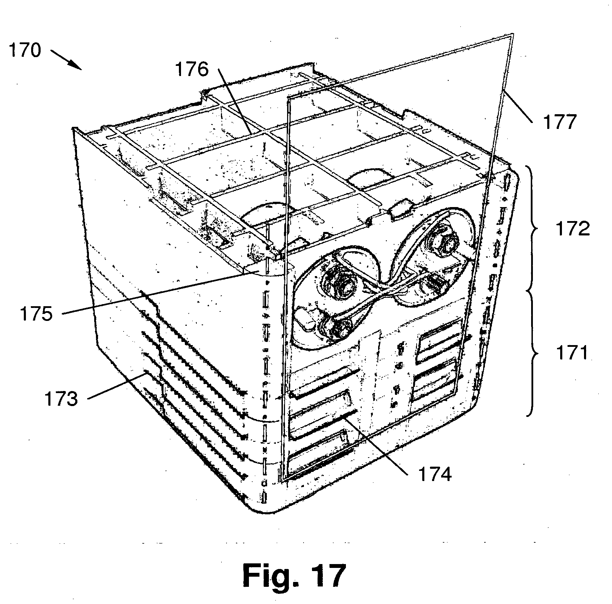

Ausgehend vom Grundelement 130 aus Fig. 13a und 13b, gegebenenfalls einer zusätzlichen steifen Platte zur gleichmäßigeren Verteilung der Kräfte werden abwechselnd ein Kühl-/Heizelement 81 aus Fig. 8, eine Zelle 140 aus Fig. 14, ein weiteres Kühl-/Heizelement 81 und eine Zelle 150 aus Fig. 15 gestapelt. Je nach Bedarf kann diese Abfolge aus Kühl-/Heizelement 81, Zelle 140, Kühl-/Heizelement 81 und Zelle 150 beliebig oft wiederholt werden. Der erhaltene Stapel ist ohne weitere Maßnahmen durch die Verzahnung am Rand des Kühl-/Heizelements 81 stabil (siehe hierzu auch Fig. 17). Bei Versuchen konnten Stapel von etwa 1 m Höhe problemlos aufgebaut werden. Vorteilhaft können aber auch Gruppen von Kühl-/Heizelementen 81 (und Zellen 140, 150) miteinander verklebt werden, insbesondere dicht verklebt werden. Bevorzugt werden solche Module in einem vorgeschalteten Montageschritt angefertigt, sodass bei der Endmontage des Paketakkus nur mehr wenige Module aufeinander gestapelt werden müssen.

### Akkumulator-Trenn-Einheit (Battery Disconnect Unit)

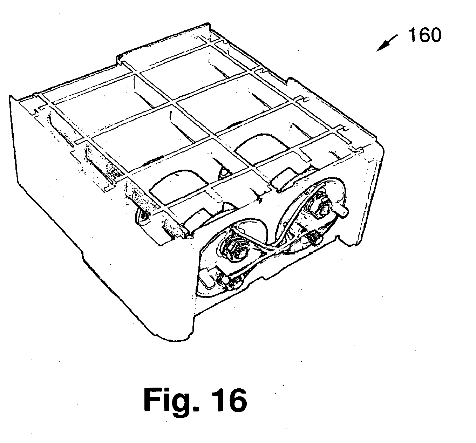

Fig. 16 zeigt eine Akkumulator-Trenn-Einheit 160. Deutlich zu sehen sind die Verstärkungsrippen im Inneren der Akkumulator-Trenn-Einheit 160, welche für eine Kraftübertragung zwischen oberer und unterer Verbindungsfläche sorgen. Die elektrische Funktion der Akkumulator-Trenn-Einheit 160 ist an sich bekannt. Die Akkumulator-Trenn-Einheit 160 ist dafür vorgesehen, den Hochspannungskreis mit Hilfe von Relais galvanisch vom Fahrzeug oder anderen daran angeschlossenen Geräten zu trennen. Weiterhin umfasst die Akkumulator-Trenn-Einheit 160 einen Vorladekreis, welcher vor dem eigentlichen Schalten der Relais eine ohmsche Verbindung zwischen Akkumulator und Fahrzeug herstellt, um Potentialunterschiede ausgleichen zu können. Schließlich umfasst die Akkumulator-Trenn-Einheit 160 in der dargestellten Variante Stromsensoren und Spannungssensoren für Messungen im Hochspannungsbereich und zur Überwachung der Relaisfunktion.

Fig. 17 zeigt einen halbfertigen Paketakkumulator 170, bestehend aus dem zuvor erhaltenen Stapel 171 sowie einer darauf aufgesetzten Akkumulator-Trenn-Einheit 172. Gut zu sehen ist auch die Verzahnung 173 der einzelnen Kühl-/Heizelemente sowie die verbundenen Kontakte 174 der einzelnen Zellen. Die Akkumulator-Trenn-Einheit 172 weist auch einen Kühlkanal 175 auf, sodass das Kühlmedium von den unter der Akkumulator-Trenn-Einheit 172 angeordneten Kühl-/Heizelement in die Akkumulator-Trenn-Einheit 172 fließen kann (in der Fig. 17 sind der besseren Vorstellbarkeit halber die Achsen der Kühlkanäle eingezeichnet). Zur Versteifung weist die Akkumulator-Trenn-Einheit 172 überdies Verstärkungsrippen 176 auf, um die mitunter hohen Kräfte innerhalb des Stapels weiterleiten zu können. Alle elektrischen Verbindungen (sowohl Hochvolt als auch Niedervolt) sind vorteilhaft in einer Verbindungsebene 177 angeordnet, womit eine besonders einfache elektrische Verbindungstechnik angewandt werden kann.

### Zellüberwachungs-Einheit (Cell Supervisor Circuit)

Fig. 18 zeigt einen halbfertigen Paketakkumulator 180, bestehend aus aufeinandergestapelten Kühl-/Heizelementen 181, einer darauf aufgesetzten Akkumulator-Trenn-Einheit 182 sowie weiteren Kühl-/Heizelementen 181. Ein Bereich 183 deutet an, wo später eine Zellüberwachungs-Einheit angeordnet wird. Die Positionierung der Zellüberwachungs-Einheit erfolgt direkt zwischen den Zellanschlüssen. Dieser Bereich ist durch Stege des Kühl-/Heizelements umrandet. Diese Stege bilden, versehen mit geeigneten Rasten die Halterung der Zellüberwachungs-Einheit und enthalten vorteilhaft Elemente, die eine Kodierung bzw. sichere Positionierung der Zellüberwachungs-Einheit über den seitlich liegenden Zellabzweigungen ermöglicht. Diese Zellabzweigungen sind für leitfähige Klebestellen oder direkt zum Stecken ausgeführt. Eine etwaige Verklebung der Zellüberwachungs-Einheit mit den Zellabzweigungen kann durch große Durchkontaktierungen in der Platine der Zellüberwachungs-Einheit erfolgen. Sind die Zellabzweigungen sehr kurz gehalten, so besteht eine gute thermische Anbindung zum Zellkörper, wodurch die Sensoren zur Temperaturmessung direkt auf der Platine der Zellüberwachungs-Einheit, jedoch in der Nähe der Zellabzweigungen positioniert werden können. Damit kann ein Teil der Niedervolt-Verkabelung inklusive der Stecker zu den Zellen, wie sie bei herkömmlichen Systemen erforderlich sind, entfallen. Durch den geringen Abstand der einzelnen Zellüberwachungs-Einheiten zueinander ist auch eine Anordnung von mehreren Zellüberwachungs-Einheiten auf einer einzigen (hier länglichen) Platine denkbar. Die maximale Länge wird an sich lediglich durch die thermischen Ausdehnungseigenschaften das Kühl-/Heizelement und der Platinen beziehungsweise der maximal produzierbaren Platinenlängen beschränkt. Die Zellüberwachungs-Einheit dient im Wesentlichen dazu, Spannung und/oder Temperaturen der Zellen zu messen, das Balancing der Zellen zu ermöglichen, sowie die Kommunikation zwischen verschiedenen Zellüberwachungs-Einheiten zu gewährleisten. Vorteilhaft erfolgt die Verbindung zwischen mehreren Zellüberwachungs-Einheiten über eine ein Spannungspotential überbrückende Verbindung, um Probleme wegen mitunter hohen Potentialunterschieden (ein Stapel von Zellen kann mehrere hundert Volt Spannung erzeugen) zu vermeiden. Beispielsweise können die Zellüberwachungs-Einheiten über optischem Weg oder über Funk verbunden sein. Die Kommunikation kann in beiden Fällen seriell von Zellüberwachungs-Einheit zu Zellüberwachungs-Einheit aber auch von jeder Zellüberwachungs-Einheit zu jeder anderen beliebigen Zellüberwachungs-Einheit erfolgen. Denkbar ist auch eine sternförmige Kommunikation zu einem zentralen Steuergerät. Selbstverständlich sind auch Mischformen denkbar.

### Akkumulator-Verwaltungs-Einheit (Battery Management Unit)

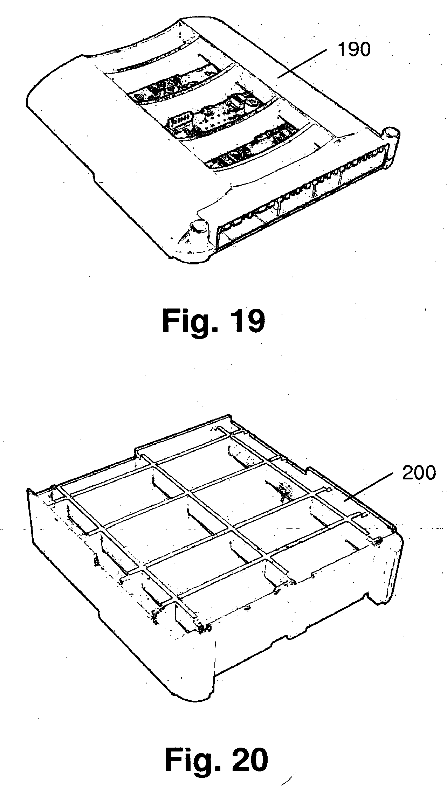

Fig. 19 zeigt eine Akkumulator-Verwaltungs-Einheit 190 (hier mit offenem Gehäuse dargestellt). Die Akkumulator-Verwaltungs-Einheit 190 ist im Wesentlichen dafür vorgesehen, die Prozesse im Akkumulator zu steuern sowie die Kommunikation mit dem Fahrzeug oder einem anderen an den Akkumulator angeschlossenen Gerät zu ermöglichen. In der dargestellten Variante umfasst die Akkumulator-Verwaltungs-Einheit 190 dazu zwei Prozessoren, welche beispielsweise Messabläufe steuern, Relais zum Trennen der Batterie vom Verbraucher ansteuern, etc.

Die Akkumulator-Verwaltungs-Einheit 190 (hier ohne Abdeckung der Elektronik abgebildet) bildet das obere Abschlusselement des Paketakkus und ist wie das Grundelement oben gewölbt ausgeführt. Vorteilhaft ist die Oberfläche derart gewölbt, dass für den Zusammenbau später verwendete Spannbänder eine auf die Grundfläche gleichmäßige Kraftverteilung bewirken. Damit das Spannband gespannt werden kann und Spannschlösser zur Verbindung der Enden des Spannbands Platz finden ist die Oberfläche in der Mitte konkav gewölbt. Auch dabei erfolgt eine auf die Fläche gleichmäßige Krafteinleitung. Die Oberfläche ist in der dargestellten Ausführungsform nur in einer Richtung gewölbt. In einer weiteren Ausführungsform kann die Oberfläche aber auch in beide Richtungen gewölbt sein, sodass sich eine 3D-Wölbung ergibt. Von der Oberfläche werden die Kräfte von direkt unter den Spannbändern positionierten Rippen zu dem unter der Akkumulator-Verwaltungs-Einheit 190 liegenden Element, geführt. Damit die Kraftverteilung auf dieses Element gleichmäßig erfolgt, ist eine zusätzliche, dazwischen liegende steife Platte vorteilhaft. Bevorzugt ist das unter der Akkumulator-Verwaltungs-Einheit 190 liegenden Element ein Kühl-/Heizelement (z.B. so wie aus Fig. 8 bekannt). Über Stege oder Rippen im Gehäuse der Akkumulator-Verwaltungs-Einheit 190 wird eine elektronische Schaltung derselben beziehungsweise deren Platine gegen den Kühl-/Heizelement gedrückt, sodass ein optimaler Wärmeübergang stattfinden kann. Insbesondere kann die Akkumulator-Verwaltungs-Einheit 190 so auch Leistungsschaltkreise enthalten. Der äußere Anschluss der Akkumulator-Verwaltungs-Einheit 190 kann über eine Steckerleiste erfolgen, die vorteilhaft in derselben Ebene wie andere Kontakte des Akkumulators liegen (nämlich in der Verbindungsebene 177 aus Fig. 17). Vorteilhaft wird die Steckerleiste der Akkumulator-Verwaltungs-Einheit 190 direkt für den Niedervolt-Anschluss des Paketakkumulators verwendet und weist dazu mindestens eine Steckerkammer (nicht abgebildet) auf, die in der besagten Ebene liegt, um die interne Niedervolt-Verbindungen zu ermöglichen. Obwohl die Akkumulator-Verwaltungs-Einheit 190 wie in Fig. 19 dargestellt vorteilhaft an der Oberseite des Paketakkumulators liegt, kann diese selbstverständlich auch als ein im Inneren des Paketakkus liegendes Modul ausgeführt sein.

### Modul mit Stromsensor, Sicherung und Hochvolt-Stecker

Fig. 20 zeigt ein Sicherungsmodul 200 (hier ohne die zugehörige Elektronik abgebildet), welches zusätzlich Stromsensoren und Hochvolt-Stecker umfasst. Im Fall eines verteilen Systems (das heißt einem Zusammenschluss von mehreren Paketakkumulatoren) wird in jedem der einzelnen Paketakkumulatoren vorteilhaft ein baugleiches Sicherungsmodul 200 verbaut, um im Kurzschlussfall jeden Paketakkumulator gesondert schützen zu können. Der Stromsensor kann auch in einem anderen Modul untergebracht werden (insbesondere in der in Fig. 16 dargestellten Akkumulator-Trenn-Einheit).

### Spannbänder:

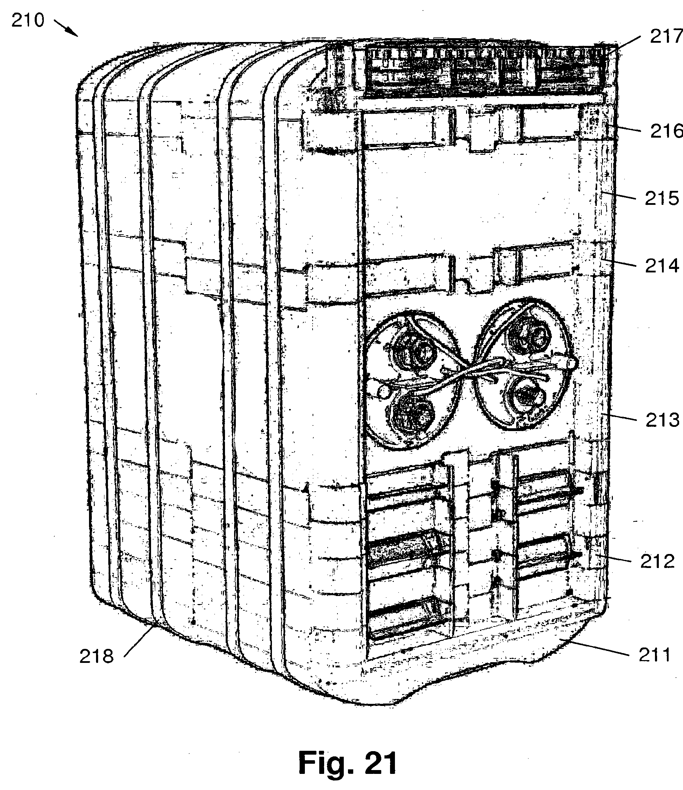

Fig. 21 zeigt nun einen fertigen Paketakkumulator 210, bestehend aus einem Grundelement 211, mehreren Kühl-/Heizelementen 212 mit innen liegenden Zellen (nicht dargestellt), einer Akkumulator-Trenn-Einheit 213, einem weiteren Kühl-/Heizelement 214, einem Sicherungsmodul 215, zusätzlich enthaltend Stromsensoren und Hochvolt-Stecker, einem weiteren Kühl-/Heizelement 216 und einer Akkumulator-Verwaltungs-Einheit 217. Im gezeigten Beispiel wird die gesamte Anordnung durch Spannbänder 218 (hier durch 4 Spannbänder 218) zusammengehalten. Zum Spannen weisen die Spannbänder 218 Spannschlösser auf, die vorteilhaft unter dem Grundelement 211 oder oberhalb der Akkumulator-Verwaltungs-Einheit 217 geführt werden.

Die Spannbänder können aus Gummi, Stahl, Kunststoff oder faserverstärktem Kunststoff bestehen. Die Wahl des Materials ist von den zu übertragenden Kräften und von den thermischen Dehnungseigenschaften der Bänder und des Modulverbunds abhängig, das heißt die Spannbänder 218 sollten hinsichtlich ihrer Dehnungseigenschaften auf das Dehnverhalten des Modulverbunds abgestimmt sein. Die Spannbänder 218 übertragen die Preßkräfte der Zellen vom Grundelement 211 zur oberen Endplatte (hier in Form der Akkumulator-Verwaltungs-Eihheit 217). Zusätzlich werden Kräfte übertragen, die über die verzahnten Ränder des Kühl-/Heizelements 212, 214 und 216 wirken und dem nur zusammengesteckten Modulverbund eine Vorspannung beziehungsweise die erforderliche Stabilität verleihen.

Die äußeren Ränder der einzelnen Bauteile bilden ein starkes, vorgespanntes, festes Gehäuse für den Akkumulator. Die Begrenzungen oder Wände der Kühlflächen der Kühl-/Heizelemente 212, 214 und 216 (siehe hierzu auch Fig. 5) bilden eine innere Versteifung des Gehäuses. Bei üblichen Anzahlen von zirka 50 Zellen für einen Paketakkumulator 210 ergeben sich 100 Wände (2 je Zelle) quer durch den Akkumulator 210 so dass ein extrem steifes aber dennoch leichtes Gehäuse entsteht, ähnlich einem durch Schottwände oder Spanten versteiften Schiffs- oder Flugzeugrumpf.

Die Spannbänder 218 können am Umfang des Gehäuses zum Schutz in die Oberfläche eingelassen bzw. versenkt sein (Ausnehmung in der Oberfläche des Modulverbunds).Der besseren Darstellbarkeit halber wurde eine Abdeckung auf der Vorderseite des Akkumulators 210, welche die die Aufgabe von Berührungsschutz und Abdichtung übernimmt, noch nicht angebracht.

Die Länge der Spannbänder 218 kann sehr leicht verändert werden, sodass aus den einzelnen Bauteilen sehr leicht viele verschiedene Typen von Paketakkumulatoren 210 gefertigt werden können. Nichts desto Trotz sind natürlich auch andere Befestigungsmöglichkeiten denkbar. Beispielsweise kann der Akkumulator verschraubt werden. Besonders geeignet sind hier Gewindestangen, deren Länge ebenfalls leicht an verschiedene Gegebenheiten angepasst werden kann. Diese Gewindestangen werden beispielsweise durch Löcher in den Modulen geschoben. Die Befestigung erfolgt dann durch Muttern. Denkbar ist aber auch, dass oberhalb und unterhalb des Paketakkumulators 210 Brücken vorgesehen werden, die an ihren Enden Löcher für die genannte Gewindestangen aufweisen und so den Paketakkumulator 210 zusammenhalten.

### Befestigungspunkte des Paketakkumulators:

Um den Paketakkumulators in einem Fahrzeug oder einem anderen, mit Energie zu versorgenden Gerät montieren zu können, sind geeignete Befestigungspunkte am Paketakkumulator erforderlich. Fig. 22 zeigt dazu den oberen Bereich eines Paketakkumulators 220, nämlich einen Deckel 221, um den ein Spannband 222 mit einem Spannschloss 223 gelegt ist. Zwischen Deckel 221 und Spannband 222 sind Befestigungslaschen 224 eingelegt, welche die Befestigung des Paketakkumulators 220 in zum Beispiel einem Fahrzeug ermöglichen. Vorteilhaft weisen der Deckel 221 und/oder die Laschen 224 dazu eine Verzahnung 225 auf, welche ein gegenseitiges Verrutschen verhindern oder zumindest verringern. Selbstverständlich ist es auch möglich, zusätzlich oder alternativ Laschen an der Unterseite des Paketakkumulators 220 vorzusehen. Denkbar ist natürlich auch, dass die Laschen Bestandteil des Bodens oder Deckels des Paketakkumulators 220 sind beziehungsweise auf andere Weise angebracht werden, beispielsweise durch Verschrauben. Insbesondere können die Laschen 224 zwischen Deckel 221 und den zu Fig. 21 erwähnten Brücken angeordnet sein.

### Abfuhr heißer Brenngase:

Fig. 23 zeigt einen weiteren Ausschnitt aus einem Stapel 230 von Einzelzellen 231, die an ihrem Rand jeweils einen Falz 232 aufweisen, welcher dem Stapel 20 aus Fig. 2 sehr ähnlich ist. Wiederum wird der Raum 233 zwischen den Zellen 231 für die Zufuhr und/oder Abfuhr eines Kühlmediums genutzt. Bei dieser Variante ist aber ein zusätzlicher mit einem Kühlmedium gekühlter Kanal 234 für die Abfuhr heißer Brenngase vorgesehen.

Fig. 24 zeigt einen Schnitt durch einen Stapel 240 mehrerer Einzelzellen 241 mit dazwischen angeordneten Kühl-/Heizelementen 243, welcher dem Stapel 50 aus Fig. 5 sehr ähnlich ist.. Die Einzelzellen 241 sind wiederum mit einem Falz 242 versehen. Bei dieser Variante ist ebenfalls ein zusätzlicher mit einem Kühlmedium gekühlter Kanal 244 für die Abfuhr heißer Brenngase vorgesehen. Damit die Brenngase in-den Kanal 244 entweichen können, sind zwischen der Stirnseite des Falzes 242 und dem Kanal 244 im Rand des Kühl-/Heizelementen 243 Öffnungen vorgesehen. Beispielsweise ist der Rand des Kühl-/Heizelementen 243 zinnenartig geformt. In Fig. 24 sind weiterer Verbindungskanäle 245 zu den Kühl-/Heizelementen 243 vorgesehen. Dies ist aber nur beispielhaft zu sehen, selbstverständlich sind auch anderer Ausgestaltungen des Kühl-/Heizelementen 243 und des Kanals 244 denkbar. Auch ist vorstellbar, dass die Kanäle der Kühl-/Heizelemente 243 und der Kanal 244 nicht getrennt, sondern gemeinsam ausgeführt sind.

Abschließend wird festgehalten dass die Darstellungen in den Figuren teilweise unmaßstäblich sind. Weiterhin können die einzelnen in den Figuren dargestellten Varianten auch den Gegenstand einer unabhängigen Erfindung bilden.

## Patentansprüche

1. Kühl-/Heizelement (12, 30, 30a, 30b, 40, 53, 60, 60a, 60b, 70, 70a, 70b, 81, 90, 181, 212, 214, 216) für einen Akkumulator (170, 180, 210), umfassend eine Kühlfläche (32, 58, 62, 72, 83) mit einer ersten Begrenzung (13), welche zum Körperkontakt zu einer ersten Zelle (11, 21, 51, 140, 150) des Akkumulators (170, 180, 210) vorgesehen ist, und einer zweiten Begrenzung (13), welche zum Körperkontakt zu einer zweiten Zelle (11, 21, 51, 140, 150) des Akkumulators (170, 180, 210) vorgesehen ist, wobei das Kühl-/Heizelement (12, 30, 30a, 30b, 40, 53, 60, 60a, 60b, 70, 70a, 70b, 81, 90, 181, 212, 214, 216) stapelbar ist und einen Zulauf (31, 54, 61, 71, 82) und/oder Ablauf (33, 55, 63, 73, 84) umfasst, welcher in einem Stapel mit einem Zulauf (31, 54, 61, 71, 82) und/oder Ablauf (33, 55, 63, 73, 84) eines benachbarten Kühl-/Heizelements (12, 30, 30a, 30b, 40, 53, 60, 60a, 60b, 70, 70a, 70b, 81, 90, 181, 212, 214, 216) zusammenwirkt,
**gekennzeichnet durch** eine Strömungsblende (74) am Rand der
Kühlfläche (32, 58, 62, 72, 83), welche einen Zulauf eines Kühl-/Heizmediums bei steigendem Abstand zwischen erster und zweiter Begrenzung (13) drosselt und/oder eine Strömungsblende (75) am Rand der Kühlfläche (32, 58, 62, 72, 83), welche einen Ablauf eines Kühl-/Heizmediums bei sinkendem Abstand zwischen erster und zweiter Begrenzung (13) drosselt.

2. Kühl-/Heizelement (12, 30, 30a, 30b, 40, 53, 60, 60a, 60b, 70, 70a, 70b, 81, 90, 181, 212, 214, 216) nach Anspruch 1, **dadurch gekennzeichnet, dass** der Zulauf (31, 54, 61, 71, 82) und/oder Ablauf (33, 55, 63, 73, 84) unmittelbar mit dem Zulauf (31, 54, 61, 71, 82) und/oder Ablauf (33, 55, 63, 73, 84) eines benachbarten Kühl-/Heizelements (12, 30, 30a, 30b, 40, 53, 60, 60a, 60b, 70, 70a, 70b, 81, 90, 181, 212, 214, 216) zusammenwirkt.

3. Kühl-/Heizelement (12, 30, 30a, 30b, 40, 53, 60, 60a, 60b, 70, 70a, 70b, 81, 90, 181, 212, 214, 216) nach Anspruch 1 oder 2, **dadurch gekennzeichnet, dass** die beiden Begrenzungen (13) elastisch miteinander verbunden sind.

4. Kühl-/Heizelement (12, 30, 30a, 30b, 40, 53, 60, 60a, 60b, 70, 70a, 70b, 81, 90, 181, 212, 214, 216) nach Anspruch 3, **dadurch gekennzeichnet, dass** im Inneren des Kühl-/Heizelements (12, 30, 30a, 30b, 40, 53, 60, 60a, 60b, 70, 70a, 70b, 81, 90, 181, 212, 214, 216) im Bereich der Kühlfläche (32, 58, 62, 72, 83) elastische Stege (14) zur Verbindung der ersten und zweiten Begrenzung (13) vorgesehen sind.

5. Kühl-/Heizelement (12, 30, 30a, 30b, 40, 53, 60, 60a, 60b, 70, 70a, 70b, 81, 90, 181, 212, 214, 216) nach Anspruch 4, **dadurch gekennzeichnet, dass** die Stege (14) geradlinig von der ersten zur zweiten Begrenzung verlaufen.

6. Kühl-/Heizelement (12, 30, 30a, 30b, 40, 53, 60, 60a, 60b, 70, 70a, 70b, 81, 90, 181, 212, 214, 216) nach Anspruch 4, **dadurch gekennzeichnet, dass** die Stege (14) Krümmungsbereiche aufweisen.

7. Kühl-/Heizelement (12, 30, 30a, 30b, 40, 53, 60, 60a, 60b, 70, 70a, 70b, 81, 90, 181, 212, 214, 216) nach Anspruch 6, **dadurch gekennzeichnet, dass** die Stege (14) mäanderförmig ausgestaltet sind.

8. Kühl-/Heizelement (12, 30, 30a, 30b, 40, 53, 60, 60a, 60b, 70, 70a, 70b, 81, 90, 181, 212, 214, 216) nach Anspruch 4, **dadurch gekennzeichnet, dass** die Stege (14) schräg von der ersten Begrenzung (13) zur zweiten Begrenzung (13) verlaufen.

9. Kühl-/Heizelement (12, 30, 30a, 30b, 40, 53, 60, 60a, 60b, 70, 70a, 70b, 81, 90, 181, 212, 214, 216) nach einem der Ansprüche 1 bis 8, **gekennzeichnet durch** Abstandsnoppen im Bereich der Kühlfläche (32, 58, 62, 72, 83).

10. Kühl-/Heizelement (12, 30, 30a, 30b, 40, 53, 60, 60a, 60b, 70, 70a, 70b, 81, 90, 181, 212, 214, 216) nach einem der Ansprüche 1 bis 9, **gekennzeichnet durch** einen starren Rand (56), welcher elastisch mit den Begrenzungen (13) des Kühl-/Heizelements (12, 30, 30a, 30b, 40, 53, 60, 60a, 60b, 70, 70a, 70b, 81, 90, 181, 212, 214, 216) verbunden ist.

11. Kühl-/Heizelement (12, 30, 30a, 30b, 40, 53, 60, 60a, 60b, 70, 70a, 70b, 81, 90, 181, 212, 214, 216) nach Anspruch 10, **dadurch gekennzeichnet, dass** der starre Rand (56) mindestens so hoch ist wie eine Zelle (11, 21, 51, 140, 150), die Dicke der Begrenzungen (13) und ein Mindestabstand zwischen den Begrenzungen (13).

12. Kühl-/Heizelement (12, 30, 30a, 30b, 40, 53, 60, 60a, 60b, 70, 70a, 70b, 81, 90, 181, 212, 214, 216) nach einem der Ansprüche 1 bis 11, **dadurch gekennzeichnet, dass** es eine Verzahnung (85, 173) an dessen zum Stapeln vorgesehenen Grenzflächen aufweist.

13. Kühl-/Heizelement (12, 30, 30a, 30b, 40, 53, 60, 60a, 60b, 70, 70a, 70b, 81, 90, 181, 212, 214, 216) nach einem der Ansprüche 1 bis 12, **gekennzeichnet durch** zumindest einen mit einem Kühlmedium gekühlten Kanal zur Abfuhr heißer Brenngase aus einer Zelle (11, 21, 51, 140, 150).

## Claims

1. A cooling or heating element (12, 30, 30a, 30b, 40, 53, 60, 60a, 60b, 70, 70a, 70b, 81, 90, 181, 212, 214, 216) for an accumulator (170, 180, 210), comprising a cooling surface (32, 58, 62, 72, 83) with a first boundary (13) which is provided to have physical contact with a first cell (11, 21, 51, 140, 150) of the accumulator (170, 180, 210), and a second boundary (13) which is provided to have physical contact with a second cell (11, 21, 51, 140, 150) of the accumulator (170, 180, 210), wherein the cooling or heating element (12, 30, 30a, 30b, 40, 53, 60, 60a, 60b, 70, 70a, 70b, 81, 90, 181, 212, 214, 216) can be stacked and comprises an inlet (31, 54, 61, 71, 82) and/or an outlet (33, 55, 63, 73, 84) which cooperates in a stack with an inlet (31, 54, 61, 71, 82) and/or an outlet (33, 55, 63, 73, 84) of an adjacent cooling or heating element (12, 30, 30a, 30b, 40, 53, 60, 60a, 60b, 70, 70a, 70b, 81, 90, 181, 212, 214, 216),
**characterized by** a flow diaphragm (74) on the edge of the cooling surface (32, 58, 62, 72, 83) which throttles an inlet flow of a cooling or heating medium with an increasing distance between the first and second boundaries (13), and/or by a flow diaphragm (75) on the edge of the cooling surface (32, 58, 62, 72, 83) which throttles an outlet flow of a cooling or heating medium with an increasing distance between the first and second boundaries (13).

2. A cooling or heating element (12, 30, 30a, 30b, 40, 53, 60, 60a, 60b, 70, 70a, 70b, 81, 90, 181, 212, 214, 216) according to claim 1, **characterized in that** the inlet (31, 54, 61, 71, 82) and/or outlet (33, 55, 63, 73, 84) cooperates directly with the inlet (31, 54, 61, 71, 82) and/or outlet (33, 55, 63, 73, 84) of an adjacent cooling or heating element (12, 30, 30a, 30b, 40, 53, 60, 60a, 60b, 70, 70a, 70b, 81,90, 181, 212, 214, 216).

3. A cooling or heating element (12, 30, 30a, 30b, 40, 53, 60, 60a, 60b, 70, 70a, 70b, 81, 90, 181, 212, 214, 216) according to claim 1 or 2, **characterized in that** both boundaries (13) are elastically connected to one another.

4. A cooling or heating element (12, 30, 30a, 30b, 40, 53, 60, 60a, 60b, 70, 70a, 70b, 81, 90, 181, 212, 214, 216) according to claim 3, **characterized in that**, in the interior of the cooling or heating element (12, 30, 30a, 30b, 40, 53, 60, 60a, 60b, 70, 70a, 70b, 81, 90, 181, 212, 214, 216), elastic webs (14) for connecting the first and second boundaries (13) are provided in the region of the cooling surface (32, 58, 62, 72, 83).

5. A cooling or heating element (12, 30, 30a, 30b, 40, 53, 60, 60a, 60b, 70, 70a, 70b, 81, 90, 181, 212, 214, 216) according to claim 4, **characterized in that** the webs (14) extend in a straight line from the first to the second boundary.

6. A cooling or heating element (12, 30, 30a, 30b, 40, 53, 60, 60a, 60b, 70, 70a, 70b, 81, 90, 181, 212, 214, 216) according to claim 4, **characterized in that** the webs (14) comprise curved regions.

7. A cooling or heating element (12, 30, 30a, 30b, 40, 53, 60, 60a, 60b, 70, 70a, 70b, 81, 90, 181, 212, 214, 216) according to claim 6, **characterized in that** the webs (14) are designed in a meandering shape.

8. A cooling or heating element (12, 30, 30a, 30b, 40, 53, 60, 60a, 60b, 70, 70a, 70b, 81, 90, 181, 212, 214, 216) according to claim 4, **characterized in that** the webs (14) extend obliquely from the first boundary (13) to the second boundary (13).

9. A cooling or heating element (12, 30, 30a, 30b, 40, 53, 60, 60a, 60b, 70, 70a, 70b, 81, 90, 181, 212, 214, 216) according to any of claims 1 to 8, **characterized by** spacer studs in the region of the cooling surface (32, 58, 62, 72, 83).

10. A cooling or heating element (12, 30, 30a, 30b, 40, 53, 60, 60a, 60b, 70, 70a, 70b, 81, 90, 181, 212, 214, 216) according to any of claims 1 to 9, **characterized by** a rigid edge (56) which is elastically connected to the boundaries (13) of the cooling or heating element (12, 30, 30a, 30b, 40, 53, 60, 60a, 60b, 70, 70a, 70b, 81, 90, 181, 212, 214, 216).

11. A cooling or heating element (12, 30, 30a, 30b, 40, 53, 60, 60a, 60b, 70, 70a, 70b, 81, 90, 181, 212, 214, 216), according to claim 10, **characterized in that** the rigid edge (56) is at least as high as a cell (11, 21, 51, 140, 150), the thickness of the boundaries (13), and a minimum distance between the boundaries (13).

12. A cooling or heating element (12, 30, 30a, 30b, 40, 53, 60, 60a, 60b, 70, 70a, 70b, 81, 90, 181, 212, 214, 216) according to any of claims 1 to 11, **characterized in that** it comprises a toothing (85, 173) at its boundary surfaces which are provided to be stacked.

13. A cooling or heating element (12, 30, 30a, 30b, 40, 53, 60, 60a, 60b, 70, 70a, 70b, 81, 90, 181, 212, 214, 216) according to any of claims 1 to 12, **characterized by** at least one channel cooled by a cooling medium for discharging hot fuel gases from a cell (11, 21, 51, 140, 150).

## Revendications

1. Elément de refroidissement/de chauffage (12, 30, 30a, 30b, 40, 53, 60, 60a, 60b, 70, 70a, 70b, 81, 90, 181, 212, 214, 216) pour un accumulateur (170, 180, 210), présentant une surface de refroidissement (32, 58, 62, 72, 83) avec une première délimitation (13) prévue pour un contact physique avec une première cellule (11, 21, 51, 140, 150) de l'accumulateur (170, 180, 210), et une deuxième délimitation (13) prévue pour un contact physique avec une deuxième cellule (11, 21, 51, 140, 150) de l'accumulateur (170, 180, 210), ledit élément de refroidissement/de chauffage (12, 30, 30a, 30b, 40, 53, 60, 60a, 60b, 70, 70a, 70b, 81, 90, 181, 212, 214, 216) étant empilable et comportant une amenée (31, 54, 61, 71, 82) et/ou une évacuation (33, 55, 63, 73, 84), coopérant dans une pile avec une amenée (31, 54, 61, 71, 82) et/ou une évacuation (33, 55, 63, 73, 84) d'un élément de refroidissement/de chauffage (12, 30, 30a, 30b, 40, 53, 60, 60a, 60b, 70, 70a, 70b, 81, 90, 181, 212, 214, 216) contigu, **caractérisé par** un diaphragme d'écoulement (74) au bord de la surface de refroidissement (32, 58, 62, 72, 83), lequel étrangle une amenée d'un fluide de refroidissement/ de chauffage pour un espacement croissant entre la première et la deuxième délimitation (13) et/ou un diaphragme d'écoulement (75) au bord de la surface de refroidissement (32, 58, 62, 72, 83), lequel étrangle une évacuation d'un fluide de refroidissement/de chauffage pour un espacement décroissant entre la première et la deuxième délimitation (13).

2. Elément de refroidissement/de chauffage (12, 30, 30a, 30b, 40, 53, 60, 60a, 60b, 70, 70a, 70b, 81, 90, 181, 212, 214, 216) selon la revendication 1, **caractérisé en ce que** l'amenée (31, 54, 61, 71, 82) et/ou l'évacuation (33, 55, 63, 73, 84) coopèrent directement avec l'amenée (31, 54, 61, 71, 82) et/ou l'évacuation (33, 55, 63, 73, 84) d'un élément de refroidissement/de chauffage (12, 30, 30a, 30b, 40, 53, 60, 60a, 60b, 70, 70a, 70b, 81, 90, 181, 212, 214, 216) contigu.

3. Elément de refroidissement/de chauffage (12, 30, 30a, 30b, 40, 53, 60, 60a, 60b, 70, 70a, 70b, 81, 90, 181, 212, 214, 216) selon la revendication 1 ou 2, **caractérisé en ce que** les deux délimitations (13) sont raccordées l'une à l'autre de manière élastique.

4. Elément de refroidissement/de chauffage (12, 30, 30a, 30b, 40, 53, 60, 60a, 60b, 70, 70a, 70b, 81, 90, 181, 212, 214, 216) selon la revendication 3, **caractérisé en ce que** des traverses (14) élastiques sont prévues à l'intérieur de l'élément de refroidissement/de chauffage (12, 30, 30a, 30b, 40, 53, 60, 60a, 60b, 70, 70a, 70b, 81, 90, 181, 212, 214, 216) au niveau de la surface de refroidissement (32, 58, 62, 72, 83) pour le raccordement entre la première et la deuxième délimitation (13).

5. Elément de refroidissement/de chauffage (12, 30, 30a, 30b, 40, 53, 60, 60a, 60b, 70, 70a, 70b, 81, 90, 181, 212, 214, 216) selon la revendication 4, **caractérisé en ce que** les traverses (14) s'étendent en ligne droite de la première à la deuxième délimitation.

6. Elément de refroidissement/de chauffage (12, 30, 30a, 30b, 40, 53, 60, 60a, 60b, 70, 70a, 70b, 81, 90, 181, 212, 214, 216) selon la revendication 4, **caractérisé en ce que** les traverses (14) présentent des parties incurvées.

7. Elément de refroidissement/de chauffage (12, 30, 30a, 30b, 40, 53, 60, 60a, 60b, 70, 70a, 70b, 81, 90, 181, 212, 214, 216) selon la revendication 6, **caractérisé en ce que** les traverses (14) sont en forme de méandres.

8. Elément de refroidissement/de chauffage (12, 30, 30a, 30b, 40, 53, 60, 60a, 60b, 70, 70a, 70b, 81, 90, 181, 212, 214, 216) selon la revendication 4, **caractérisé en ce que** les traverses (14) s'étendent obliquement de la première délimitation (13) à la deuxième délimitation (13).

9. Elément de refroidissement/de chauffage (12, 30, 30a, 30b, 40, 53, 60, 60a, 60b, 70, 70a, 70b, 81, 90, 181, 212, 214, 216) selon l'une des revendications 1 à 8, **caractérisé par** des bosses d'espacement au niveau de la surface de refroidissement (32, 58, 62, 72, 83).

10. Elément de refroidissement/de chauffage (12, 30, 30a, 30b, 40, 53, 60, 60a, 60b, 70, 70a, 70b, 81, 90, 181, 212, 214, 216) selon l'une des revendications 1 à 9, **caractérisé par** un bord rigide (56) raccordé de manière élastique aux délimitations (13) de l'élément de refroidissement/de chauffage (12, 30, 30a, 30b, 40, 53, 60, 60a, 60b, 70, 70a, 70b, 81, 90, 181, 212, 214, 216).

11. Elément de refroidissement/de chauffage (12, 30, 30a, 30b, 40, 53, 60, 60a, 60b, 70, 70a, 70b, 81, 90, 181, 212, 214, 216) selon la revendication 10, **caractérisé en ce que** le bord rigide (56) est au moins aussi haut qu'une cellule (11, 21, 51, 140, 150), l'épaisseur des délimitations (13) et un espacement minimal entre les délimitations (13).

12. Elément de refroidissement/de chauffage (12, 30, 30a, 30b, 40, 53, 60, 60a, 60b, 70, 70a, 70b, 81, 90, 181, 212, 214, 216) selon l'une des revendications 1 à 11, **caractérisé en ce que** celui-ci présente une denture (85, 173) sur ses surfaces limites prévues pour empilement.

13. Elément de refroidissement/de chauffage (12, 30, 30a, 30b, 40, 53, 60, 60a, 60b, 70, 70a, 70b, 81, 90, 181, 212, 214, 216) selon l'une des revendications 1 à 12, **caractérisé par** au moins un canal refroidi par un fluide de refroidissement pour l'échappement de gaz de combustion chauds hors d'une cellule (11, 21, 51, 140, 150).
